(19) **Europäisches Patentamt European Patent Office Office européen des brevets**

(11) **EP 4 417 941 B1**

(12) **EUROPEAN PATENT SPECIFICATION**

(45) Date of publication and mention of the grant of the patent:
**06.05.2026 Bulletin 2026/19**

(21) Application number: **22880716.0**

(22) Date of filing: **16.09.2022**

(51) International Patent Classification (IPC):
*G01C 21/36* (2006.01)    *B25J 5/00* (2006.01)
*G06N 20/00* (2019.01)    *G08G 1/00* (2006.01)
*G08G 1/0969* (2006.01)

(52) Cooperative Patent Classification (CPC):
**G01C 21/20; G06N 3/00; G06N 3/006; G06N 3/044; G06N 3/045; G06N 3/08; G06N 3/084; G06N 3/092; G06N 5/01; G06N 7/01; G06N 20/00;** G08G 1/0968

(86) International application number:
**PCT/JP2022/034665**

(87) International publication number:
**WO 2023/063020 (20.04.2023 Gazette 2023/16)**

(54) **ROUTE PLANNING SYSTEM, ROUTE PLANNING METHOD, ROADMAP CONSTRUCTING DEVICE, MODEL GENERATING DEVICE, AND MODEL GENERATING METHOD**

ROUTENPLANUNGSSYSTEM, ROUTENPLANUNGSVERFAHREN, STRASSENKARTENKONSTRUKTIONSVORRICHTUNG, MODELLERZEUGUNGSVORRICHTUNG UND MODELLERZEUGUNGSVERFAHREN

SYSTÈME DE PLANIFICATION D'ITINÉRAIRE, PROCÉDÉ DE PLANIFICATION D'ITINÉRAIRE, DISPOSITIF DE CONSTRUCTION DE CARTE ROUTIÈRE, DISPOSITIF DE GÉNÉRATION DE MODÈLE, ET PROCÉDÉ DE GÉNÉRATION DE MODÈLE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **15.10.2021 JP 2021169361**

(43) Date of publication of application:
**21.08.2024 Bulletin 2024/34**

(73) Proprietor: OMRON Corporation
**Kyoto 600-8530 (JP)**

(72) Inventors:
• **OKUMURA, Keisuke**
**Tokyo 113-0033 (JP)**
• **YONETANI, Ryo**
**Tokyo 113-0033 (JP)**
• **KUROSE NISHIMURA Mai**
**Tokyo 113-0033 (JP)**
• **MATSUI, Asako**
**Tokyo 113-0033 (JP)**

(74) Representative: **Becker, Eberhard**
**Becker Kurig & Partner**
**Patentanwälte mbB**
**Bavariastraße 7**
**80336 München (DE)**

(56) References cited:
WO-A1-2020/117958    CN-A- 109 059 931
CN-A- 111 415 048    JP-A- 2007 531 110
US-A1- 2019 361 452    US-A1- 2020 041 274

• MEHUL DAMANI ET AL: "PRIMAL2: Pathfinding via Reinforcement and Imitation Multi-Agent Learning -- Lifelong", ARXIV.ORG, CORNELL UNIVERSITY LIBRARY, 201 OLIN LIBRARY CORNELL UNIVERSITY ITHACA, NY 14853, 4 March 2021 (2021-03-04), XP081898415, DOI: 10.1109/LRA.2021.3062803

- ARIAS FELIPE FELIX ET AL: "Avoidance Critical Probabilistic Roadmaps for Motion Planning in Dynamic Environments", 2021 IEEE INTERNATIONAL CONFERENCE ON ROBOTICS AND AUTOMATION (ICRA), IEEE, 30 May 2021 (2021-05-30), pages 10264 - 10270, XP033989817, DOI: 10.1109/ICRA48506.2021.9560974

**Description**

[Technical Field]

The present invention relates to a route planning system, a route planning method, a roadmap constructing device, a model generating device, and a model generating method.

[Background Art]

There are route planning problems of multiple agents in which each of a plurality of agents plans a route for movement to a destination. An agent, for example, is a mobile body that autonomously moves (for example, a conveying robot, a cleaning robot, an automatic driving vehicle, a drone, or the like), a person, a device operated by a person, a manipulator, or the like. Conventionally, the route planning problems of multiple agents are solved on a grid map (a grip space) set in advance. For example, in Non-Patent Document 1, a method of performing a route planning of each agent on a grid map by using a model trained through machine learning is proposed.

According to a method using this grid map, positions to which each agent can move are defined in advance, and thus a route of each agent can be found relatively simply. However, movement of each agent is limited in accordance with grids set in advance. For this reason, there is a limit for acquiring a better route (for example, a shortest route in a real space) for each agent.

Thus, a method for solving route planning problems of multiple agents not on a grid space set in advance but a continuous space in which each agent can move to a free position has been reviewed. In a case in which route planning problems are to be solved on a continuous space, an approach for constructing a roadmap and searching for a route of each agent on the constructed roadmap is frequently employed (for example, Non-Patent Document 2).

A roadmap is composed of nodes and edges and identifies a range in which a route of each agent is to be searched. A node represents a position to which movement can be made, and an edge connects nodes and represents that movement can be made between the connected nodes. When this roadmap is constructed, a node can be disposed at an arbitrary position in accordance with a continuous space that is a target for searching for a route. For this reason, compared to a method using a grid map in which positions to which movement can be made are fixed in advance, according to a method in which a route is searched for on this continuous space, there is a possibility of obtaining a better route for each agent.

[Citation List]

[Non-Patent Literature]

[Non-Patent Literature 1]
Mehul Damani, Zhiyao Luo, Emerson Wenzel, Guillaume Sartoretti, "PRIMAL2 Pathfinding via Reinforcement and Imitation Multi-Agent Learning -- Lifelong", IEEE Robotics and Automation Letters, Volume 6, Issue 2, p. 2666-2673, 2021
[Non-Patent Literature 2]
Felipe Felix Arias, Brian Andrew Ichter, Aleksandra Faust, Nancy M. Amato, "Avoidance Critical Probabilistic Roadmaps for Motion Planning in Dynamic Environments", IEEE International Conference on Robotics and Automation, 2021

WO 2020/117958 A1 relates to a motion planner of a computer system of a primary agent, e.g., an autonomous vehicle, uses reconfigurable collision detection architecture hardware to perform a collision assessment on a planning graph for the primary agent prior to execution of a motion plan. US 2020/041274 A1 relates to systems and methods related to roadmaps for robotic devices, the computing device can receive a roadmap representing paths through an environment.

[Summary of Invention]

[Technical Problem]

Inventors and the like of the present disclosure have found that there are the following problems in the above-described conventional method in which route planning problems of multiple agents are solved on a continuous space. In other words, in the conventional method, by disposing nodes in the entire continuous space, a roadmap common to agents is constructed. In one example, nodes are randomly disposed in the entire continuous space. As another example, in a method proposed in Non-Patent Document 2, by using a model trained using machine learning, a node is disposed at a position at which other agents can be avoided near an obstacle. In any method, basically, nodes are disposed in the entire continuous space.

At this time, by densely disposing nodes on a continuous space, the number of combinations of routes that can be employed by each agent increases. For this reason, a likelihood of being able to find a more optimal route of each agent using a roadmap thereof is increased. However, when nodes are increasingly densely disposed, the number of nodes increases accordingly, and thus the costs (computational costs and time costs) incurred for searching for a route increase. Thus, when nodes are sparsely disposed, although a cost required for a search can be reduced, the possibility of being able to find an optimal route becomes low. In the worst case, it may become impossible to find a route that can bypass obstacles or other agents. Therefore, conventional methods have a problem that it is difficult to find more optimal routes and reduce search costs at the same time.

In addition, this problem is not limited to situations in which the movement routes of multiple agents are searched for. Each node may be configured to represent states (for example, a speed, a direction, and the like) other than a position. In such a case, the problem described above may similarly occur also in a scene in which a transition route from a start state to a goal state of each agent in a continuous state space is searched for.

One aspect of the present invention is in consideration of such situations, and an object thereof is to provide a technology achieving an increase in the possibility of being able to find a more optimal route for an agent and reducing a cost required for a search when route planning problems of multiple agents are to be solved on a continuous state space.

[Solution to Problem]

**In** order to solve the problems described above, the present invention employs the following configurations.

A route planning system according to one aspect of the present invention includes an information acquiring unit, a map constructing unit, and a search unit. The information acquiring unit is configured to obtain target information including a start state and a goal state of each of a plurality of agents in a continuous state space. The map constructing unit is configured to construct a roadmap for each of the agents from the obtained target information using a roadmap constructing model that has completed training. The search unit is configured to search for a route of each of the agents from the start state to the goal state on the roadmap constructed for each agent.

The roadmap constructing model includes a first processing module, a second processing module, and an estimation module. The first processing module is configured to generate first characteristics information from target agent information including a goal state of a target agent and a candidate state of a target time step. The second processing module is configured to generate second characteristics information from other agent information including goal states of other agents other than the target agent and candidate states of the target time step. The estimation module configured to estimate one or more candidate states of the target agent in a time step next to the target time step from the first characteristics information and the second characteristics information that are generataed. The roadmap constructing model that has completed training is generated using machine learning using learning data acquired from correct answer routes of a plurality of agents for learning.

The constructing of the roadmap for each agent is configured by executing a process of handling one agent among the plurality of agents as the target agent, handling at least some of remaining agents among the plurality of agents as the other agents, estimating one or more candidate states in a next time step using the roadmap constructing model that has completed training by designating the start state of the one agent represented in the obtained target information as a candidate state of the target agent in an initial target time step, and repeating estimating of the candidate state of a next time step using the roadmap constructing model that has completed training by designating each of the one or more estimated candidate states in the next time step as a candidate state of a new target time step until the goal state or a state near the goal state of the one agent is included in estimated one or more candidate states in the next time step by designating each of the plurality of agents as the target agent.

A candidate state corresponds to a node composing a roadmap. In other words, the estimation module is configured to estimate a disposition of one or more nodes to which a transition can be made in a next time step on a continuous state space from each characteristics information of the target time step for the target agent. A candidate state of a target time step and a candidate state of a next time step, which is acquired through estimation, are connected using an edge. An edge represents that a transition from a certain candidate state (node) to another candidate state (node) can be made.

In this configuration, a roadmap of each agent is constructed using the roadmap constructing model that has completed training. The used roadmap constructing model that has completed training is generated using machine learning using learning data acquired from correct answer routes of a plurality of agents for learning. According to this machine learning, the roadmap constructing model can obtain a capability of constructing a roadmap based on an appropriate route from a start state to a goal state of an agent. Thus, according to this configuration, a roadmap in which nodes are disposed in an appropriate route from a start state to a goal state of each agent (that is, a route desired to be searched) and a peripheral range thereof can be constructed for each agent. In other words, according to this configuration, by using the trained roadmap constructing model that has learning correct answer routes, a roadmap that is appropriate for each agent can be acquired. In contrast to this, in the conventional method described above, by disposing nodes in an entire continuous state space, a roadmap that is common to all the agents is constructed. Compared to this conventional method, in the roadmap acquired using this configuration, a range in which nodes are disposed can be narrowed down into an appropriate range of each agent. In other words, disposition of a node at a position that is useless in a search route of each agent can be omitted. For this reason, even when nodes are densely disposed on the roadmap, an increase in the number of nodes can be inhibited. Thus, according to this configuration, when route planning problems of multiple agents are to be solved on a continuous state space, the possibility of finding a more optimal route for an agent is raised, and reduction of a cost required for a search can be achieved.

In the route planning system according to the first aspect described above, the roadmap constructing model may further include a third processing module configured to generate third characteristics information from environmental information including information relating to obstacles. The estimation module may be configured to estimate one or more candidate states in the next time step from the first characteristics information, the second characteristics information, and the third characteristics information that are generated. The obtained target information may be configured to further include the information relating to obstacles present in the continuous state space. The using of the roadmap constructing model that has completed training may include configuring of the environmental information from the information included in the obtained target information and giving of the configured environmental information to the third processing module. In this configuration, a disposition of nodes configuring the roadmap of each agent can be estimated with a status of the environment including obstacles taken into account. For this reason, also in an environment in which obstacles are present, a roadmap that is appropriate for each agent can be constructed. Thus, according to this configuration, the possibility of finding an optimal route for an agent on a continuous state space is further raised, and further reduction of a cost relating to a search can be achieved.

In the route planning system according to the first aspect described above, the target agent information may be configured to further include a candidate state of the target agent in a time step before the target time step. The other agent information may be configured to further include candidate states of the other agents in a time step before the target time step. In this configuration, a disposition of nodes configuring the roadmap of each agent can be estimated with a state transition of each agent taken into account in a time series. For this reason, for an agent reaching from a start state to a goal state over a plurality of time steps, an appropriate roadmap can be constructed. Thus, according to this configuration, the possibility of finding an optimal route for an agent on a continuous state space is further raised, and further reduction of a cost relating to a search can be achieved.

In the route planning system according to the first aspect described above, the target agent information may be configured to further include attributes of the target agent.

In a conventional method, since a roadmap that is common to agents is used in route searching, it is difficult to take an individual difference of each agent into account (in other words, to handle agents having different attributes). As one example, a scene for searching for a movement route of each agent that is a mobile body on a continuous space in which a thin passage is present is assumed. In this scene, in a case in which sizes of agents are allowed to be different from each other, a case in which although some agents can pass through this passage, the remaining agents cannot pass through this passage may occur. In this case, in the conventional method, when nodes configuring the roadmap are disposed in this passage, for an agent that cannot pass through this passage, there is a possibility of searching for a route through which it cannot actually move. On the other hand, when nodes configuring the roadmap are not disposed in this passage, there is a possibility of not being able to search for an optimal route for an agent that can pass through this passage. In this way, in the conventional method, it is difficult to handle agents having mutually-different attributes.

In contrast to this, in this configuration, a disposition of nodes configuring the roadmap is estimated for each agent with attributes of each agent taken into account. In accordance with this, even in a case in which agents having mutually-different attributes are present, an appropriate roadmap can be constructed for each agent. In the case described above, for an agent that can pass through this passage (in a case in which this passage is present on an optimal route or in a peripheral range thereof), a roadmap in which nodes are disposed in this passage is constructed, and, for an agent that cannot pass through this passage, a roadmap in which nodes are not disposed in this passage can be constructed. Thus, according to this configuration, even in a case in which agents having mutually-different attributes are mixed, route planning problems of multiple agents on a continuous state space can be appropriately solved.

In the route planning system according to the one aspect described above, the attributes of the target agent may include at least one of a size, a shape, a maximum speed, and a weight. According to this configuration, even in a case in which agents in which at least one of the size, the shape, the maximum speed, and the weight is different from each other are mixed, route planning problems of multiple agents on a continuous state space can be appropriately solved.

In the route planning system according to the one aspect described above, the other agent information may be configured to further include attributes of the other agents. In this configuration, a disposition of nodes configuring a roadmap of the target agent can be estimated with the attributes of the other agents taken into account. Thus, also under an environment in which agents having various attributes are present, a roadmap that is appropriate for each agent can be constructed. Thus, according to this configuration, the possibility of finding an optimal route for an agent on a continuous state space is further raised, and further reduction of a cost relating to a search can be achieved.

In the route planning system according to the one aspect described above, the attributes of the other agents may include at least one of a size, a shape, a maximum speed, and a weight. Thus, according to this configuration, also under an environment in which agents in which at least one of the size, the shape, the maximum speed, and the weight is different are present, a roadmap that is appropriate for each agent can be constructed. In accordance with this, the possibility of finding an optimal route for an agent on a continuous state space is further raised, and further reduction of a cost relating to a search can be achieved.

In the route planning system according to the one aspect described above, the target agent information may be configured to further include a direction flag representing a direction in which the target agent is to transition in the continuous state space. In a case in which transition directions of correct answer routes from which learning data used in machine learning has been acquired are biased, there is a possibility of the roadmap constructing model that has completed training constructing a roadmap in which nodes are disposed only in a biased direction for each agent. In a case in which nodes are disposed in a biased direction, the width of selection of a state transition becomes narrow, and thus there is a possibility of not being able to find an optimal route for at least one agent. For this, in this configuration, by using the direction flag given to the roadmap constructing model, disposition directions of nodes composing the roadmap of each agent can be controlled. In accordance with this, in the roadmap of each agent, disposition of the nodes in a biased direction can be inhibited. As a result, the possibility of finding an optimal route for an agent on a continuous state space can be further raised.

In the route planning system according to the one aspect described above, each of the plurality of agents may be a mobile body configured to autonomously move. According to this configuration, in a scene in which route planning problems of a plurality of mobile bodies are solved, the possibility of finding a more optimal route for each mobile body is raised, and reduction of a cost required for a search can be achieved. In addition, the mobile body may be an arbitrary device configured to be autonomously movable in accordance with mechanical control. The mobile body, for example, may be a mobile robot, an automatic driving vehicle, a drone, or the like.

A form of the present invention may not be limited to a route planning system configured to construct a roadmap of each agent using a roadmap constructing model that has completed training and search for a route of each agent. One aspect of the present invention may be a roadmap constructing device configured to construct a roadmap of each agent in any one of the forms described above or a model generating device configured to generate a roadmap constructing model that has completed training in one of the forms described above.

For example, a roadmap constructing device according to one aspect of the present invention includes an information acquiring unit configured to obtain target information including a start state and a goal state of each of a plurality of agents in a continuous state space; and a map constructing unit configured to construct a roadmap for each of the agents from the obtained target information using a roadmap constructing model that has completed training. According to this configuration, by using the trained roadmap constructing model that has learned correct answer routes, a roadmap that is appropriate for each agent can be acquired. **In** accordance with this, when route planning problems of multiple agents are to be solved on a continuous state space, the possibility of finding a more optimal route for an agent is raised, and reduction of a cost required for a search can be achieved.

For example, the model generating device according to one aspect of the present invention includes a data acquiring unit configured to obtain learning data generated from correct answer routes of a plurality of agents for learning and a learning processing unit configured to perform machine learning of a roadmap constructing model using the obtained learning data. The learning data includes a goal state in the correct answer route of each agent for learning and a plurality of data sets. Each of the plurality of data sets is configured using a combination of a state of each agent for learning in a first time step and a state of each agent for learning in a second time step. The second time step is a time step next to the first time step. The machine learning of the roadmap constructing model is configured by: handling one agent for learning among the plurality of agents for learning as the target agent; handling at least some of remaining agents for learning among the plurality of agents for learning as the other agents; and training the roadmap constructing model such that a candidate state of the target agent in a next time step, which is estimated by the estimation module, is appropriate for a state of the one agent for learning in the second time step by, for each data set, giving a state of the one agent for learning in the first time step to the first processing module as a candidate state of the target agent in the target time step and giving states of at least some of remaining agents for learning in the first time step to the second processing module as candidate states of the other agents in the target time step. According to this configuration, a trained roadmap constructing model that has obtained a capability of constructing a roadmap that is appropriate for each agent can be generated. By using this trained roadmap constructing model, when route planning problems of multiple agents are to be solved on a continuous state space, the possibility of finding a more optimal route for an agent is raised, and reduction of a cost required for a search can be achieved.

In the model generating device according to the one aspect described above, the target agent information may be configured to further include a direction flag representing a direction in which the target agent is to transition in the continuous state space. Each data set may be configured to further include a training flag representing a direction from the state of the first time step to the state of the second time step in the continuous state space. The machine learning of the roadmap constructing model may include giving of the training flag of the one agent for learning to the first processing module as a direction flag of the target agent when a candidate state of the target agent in a next time step is estimated for each data set.

In this configuration, a transition direction of each data set used in machine learning can be managed on the basis of the training flag included in each data set. By using each data set in machine learning such that a transition of each direction is trained without any bias using this training flag, a trained roadmap constructing model in which it is difficult for a direction in which nodes are disposed to be biased can be generated. Furthermore, by including an item of the direction flag in the target agent information, a trained roadmap constructing model that has obtained the capability of controlling a direction in which nodes are disposed can be generated using the direction flag. By using this trained roadmap constructing model, a direction in which nodes are disposed is not biased in the roadmap of each agent, and, in accordance with this, a width of selection of a state transition can be caused not to be narrow. As a result, the possibility of finding an optimal route for an agent on a continuous state space can be further raised.

As other forms of the route planning system, the roadmap constructing device, and the model generating device according to the forms described above, one aspect of the present invention may be an information processing method realizing all or some of the components described above, may be an information processing system, a program, or a storage medium, which stores such a program, that can be read by a computer, another device, a machine, or the like. Here, the storage medium that can be read by a computer or the like is a medium that accumulates information such as a program or the like using an electric, magnetic, optical, mechanical, or chemical action.

For example, a route planning method according to one aspect of the present invention is an information processing method causing a computer to execute: a step of obtaining target information including a start state and a goal state of each of a plurality of agents in a continuous state space; a step of constructing a roadmap for each of the agents from the obtained target information using a roadmap constructing model that has completed training; and a step of searching for a route of each of the agents from the start state to the goal state on the roadmap constructed for each agent.

For example, a route planning program according to one aspect of the present invention is a program causing a computer to execute: a step of obtaining target information including a start state and a goal state of each of a plurality of agents in a continuous state space; a step of constructing a roadmap for each of the agents from the obtained target information using a roadmap constructing model that has completed training; and a step of searching for a route of each of the agents from the start state to the goal state on the roadmap constructed for each agent.

For example, a roadmap constructing method according to one aspect of the present invention is an information processing method causing a computer to execute: a step of obtaining target information including a start state and a goal state of each of a plurality of agents in a continuous state space; and a step of constructing a roadmap for each of the agents from the obtained target information using a roadmap constructing model that has completed training.

For example, a roadmap constructing program according to one aspect of the present invention is a program causing a computer to execute: a step of obtaining target information including a start state and a goal state of each of a plurality of agents in a continuous state space; and a step of constructing a roadmap for each of the agents from the obtained target information using a roadmap constructing model that has completed training.

For example, a model generating method according to one aspect of the present invention is an information processing method causing a computer to execute: a step of obtaining learning data generated from correct answer routes of a plurality of agents for learning; and a step of performing machine learning of a roadmap constructing model using the obtained learning data.

For example, a model generating program according to one aspect of the present invention is a program causing a computer to execute: a step of obtaining learning data generated from correct answer routes of a plurality of agents for learning; and a step of performing machine learning of a roadmap constructing model using the obtained learning data.

[Advantageous Effects of Invention]

According to the present invention, when route planning problems of multiple agents are to be solved on a continuous state space, an increase in the possibility of being able to find a more optimal route for an agent and reduction of a cost required for a search can be achieved.

[Brief Description of Drawings]

Fig. 1 schematically illustrates one example of a scene to which the present invention is applied.

Fig. 2A schematically illustrates one example of a configuration of a roadmap constructing model according to an embodiment.

Fig. 2B schematically illustrates one example of an arithmetic operation process of a second processing module according to an embodiment.

Fig. 3 schematically illustrates one example of a hardware configuration of a model generating device according to an embodiment.

Fig. 4 schematically illustrates one example of a hardware configuration of a route planning system according to an embodiment.

Fig. 5 schematically illustrates one example of a software configuration of a model generating device according to an embodiment.

Fig. 6 schematically illustrates one example of a method of obtaining learning data according to an embodiment.

Fig. 7 schematically illustrates one example of a machine learning method of a roadmap constructing model according to an embodiment.

Fig. 8 schematically illustrates one example of a software configuration of a route planning system according to an embodiment.

Fig. 9 schematically illustrates one example of a procedure of constructing a roadmap of each agent using a trained roadmap constructing model according to an embodiment.

Fig. 10 is a flowchart illustrating one example of a processing procedure of a model generating device according to an embodiment.

Fig. 11 is a flowchart illustrating one example of a processing procedure of a route planning system according to an embodiment.

Fig. 12 schematically illustrates one example of a roadmap of each of agents constructed using a trained roadmap constructing model according to an embodiment.

Fig. 13 schematically illustrates one example of an agent according to an embodiment.

Fig. 14 schematically illustrates one example of a configuration of a route planning system according to a modified example.

Fig. 15 schematically illustrates one example of a machine learning method of a roadmap constructing model according to a modified example.

Fig. 16A illustrates a roadmap constructed for a certain agent and a result of a route search using a technique according to an example.

Fig. 16B illustrates a roadmap constructed for a certain agent and a result of a route search using a technique according to a comparative example.

Fig. 17 illustrates a route planning result of each agent acquired using a technique according to an example.

[Description of Embodiments]

Hereinafter, an embodiment relating to one aspect of the present invention (hereinafter, also denoted as "this embodiment") will be described with reference to the drawings. However, this embodiment described below is merely an example of the present invention in every aspect. It is apparent that various improvements and modifications can be performed without departing from the scope of the appended claims of the present invention. In other words, in performing the present invention, a specific configuration according to an embodiment may be appropriately employed. In addition, although the data that appears in this embodiment can be said to have been explained in natural language, more specifically, it has been specified in computer-recognizable pseudo language, commands, parameters, machine language, or the like.

§1 Applied Example

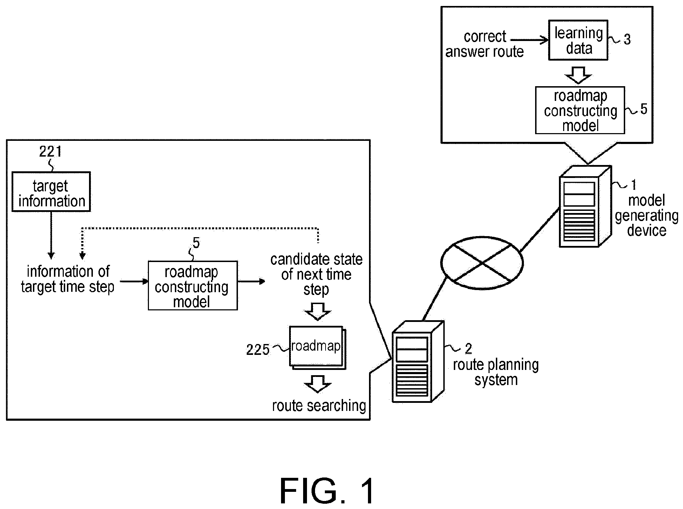

Fig. 1 schematically illustrates one example of a scene to which the present invention is applied. As illustrated in Fig. 1, an information processing system according to this embodiment includes a model generating device 1 and a route planning system 2.

[Model Generating Device]

The model generating device 1 according to this embodiment is at least one computer configured to generate a trained roadmap constructing model 5.

The model generating device 1 acquires learning data 3 generated from correct answer routes of a plurality of agents for learning. The model generating device 1 performs machine learning of the roadmap constructing model 5 using the acquired learning data 3.

(Roadmap Constructing Model)

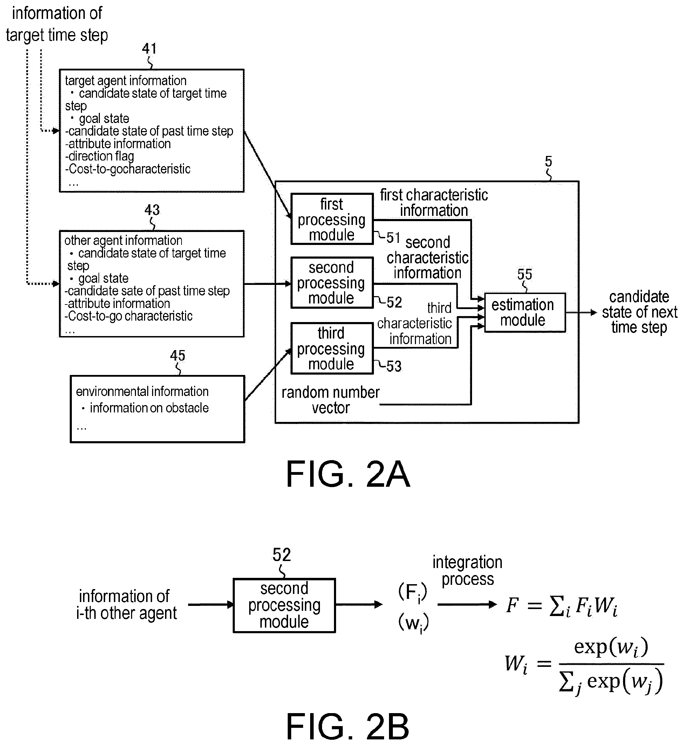

Fig. 2A schematically illustrates one example of a configuration of the roadmap constructing model 5 according to this embodiment. The roadmap constructing model 5 according to this embodiment includes a first processing module 51, a second processing module 52, a third processing module 53, and an estimation module 55.

The first processing module 51 is configured to generate first characteristics information from target agent information 41. The target agent information 41 includes information relating to a target agent that is useful for constructing a roadmap of the target agent. The target agent is an agent of interest as a target for constructing a roadmap using the roadmap constructing model 5 among a plurality of agents. The target agent information 41 is configured to include a goal state of the target agent in a continuous state space and a candidate state of a target time step.

The second processing module 52 is configured to generate second characteristics information from other agent information 43. The other agent information 43 includes information relating to one or more other agents other than the target agent that is useful for constructing a roadmap of the target agent. The other agents are agents other than an agent of interest as a target agent among a plurality of agents. The other agent information 43 is configured to include goal states of one or more other agents in a continuous state space and candidate states in a target time step.

The third processing module 53 is configured to generate third characteristics information from environmental information 45. The environmental information 45 is configured to include information relating to obstacles. The obstacles, for example, are objects interrupting a state transition (for example, movement) of an agent such as a wall, a package, animals (a human and an animal other than a human), a level difference (stairs), and the like. The obstacles may be objects that are actually present or may be virtual objects. The number of obstacles may be arbitrary. The obstacle may be an object (for example, a movable object) of which a state can transition or may be an object (for example, a still object) of which a state does not transition. The information relating to an obstacle, for example, may include information representing attributes of the obstacle such as presence/absence, a position, a size, a presence range, a shape, and the like of an obstacle. In the environmental information 45, other information relating to an environment in which an agent performs a state transition (for example, a status of an environment that may have an influence on a state transition of an agent, a rule set in the environment, and the like) that is other information other than the information relating to an obstacle may be further included. As one example, in a case in which a mobile body moving outdoors (an actual space) is assumed as an agent, the environmental information 45 may further include information relating to weather, a road surface status, and the like. For example, if an agent is assumed to be a mobile body traveling on a road such as a general vehicle, an automatic driving vehicle, or the like, the environmental information 45 may further include information relating to a congestion status, traffic regulations, a traffic rule (for example, the number of traffic signals, one-way traffic, no overtaking, maximum speed restrictions, and the like) and the like. For example, in a case in which a mobile body that flies such as a drone or the like is assumed as an agent, the environmental information 45 may further include information relating to a weather status, air regulations, and the like.

As arithmetic operation results of the processing modules 51 to 53 described above, first characteristics information, second characteristics information, and third characteristics information are generated from input data (the target agent information 41, the other agent information 43, and the environmental information 45). Each pieces of characteristics information may be represented as data in an arbitrary format that can be handled by a computer (for example, a sequence of numbers having a fixed length).

The estimation module 55 is configured to estimate one or more candidate states of a target agent in a time step next to a target time step from the first characteristics information, the second characteristics information, and the third characteristics information that are generated. The configuration of the estimation module 55 for acquiring one or more candidate states may be appropriately determined in accordance with an embodiment. As one example, the estimation module 55 may be configured to change an output (an estimation result) each time of execution of a trial. In one example illustrated in Fig. 2A, the estimation module 55 is configured to change an estimation result by further receiving input of a multi-dimensional random number vector in addition to each piece of characteristics information. A value of the random number vector, for example, may be acquired using an arbitrary method such as a known method. According to this configuration, by changing the value of the random number vector to be given to the estimation module 55, an estimation result acquired from the estimation module 55 may be changed. For this reason, by executing a plurality of trials of the process of estimating a candidate state from each piece of characteristics information (an arithmetic operation process of the estimation module 55) by changing the value of the random number vector to be given, a plurality of different candidate states can be acquired. In addition, the random number vector, for example, may be referred to as another expression such as a noise.

By including the modules (51 to 53, 55) described above, the roadmap constructing model 5 according to this embodiment is configured to estimate one or more candidate states of a target agent in a next time step from information of a target time step. Thus, according to the roadmap constructing model 5 of this embodiment, by repeating the process of estimating candidate states of a next time step from candidate states of a target time step while substituting the target time step until a goal state is reached from a start state, a roadmap of the target agent can be constructed.

The target time step is a time step that is of interest when disposition of nodes (candidate states) is estimated in the procedure of the process of constructing a roadmap. **In** candidate states of a first target time step, a start state of each agent is designated. **In** candidate states of a second target time step and subsequent time steps, candidate states estimated by the roadmap constructing model 5 in the estimation process of the previous target time step are designated. In other words, candidate states of the next time step acquired by the estimation process of the roadmap constructing model 5 are designated as candidate states of a new target time step, and the estimation process of the roadmap constructing model 5 is repeated. In accordance with this, a roadmap until reach of a goal state from the start state can be constructed. In addition, for the convenience of description, in a case in which a target time step is represented as "t-th time step", the next time step may be represented as "(t+1)-th time step" (here, t is a natural number). The first target time step may be represented as "first time step".

A roadmap defines the range of the state transition that may be taken by an agent in a continuous state space. A constructed roadmap is composed of nodes and edges. A node represents a candidate state to which a target agent can transition in a continuous state space. In other words, a candidate state corresponds to a node composing a roadmap. In the procedure of constructing a roadmap, a node representing a candidate state of a target time step and a node representing an estimated candidate state of a next time step are connected using an edge. An edge represents that a transition between connected nodes (candidate states) can be made in one time step on a continuous state space. A time interval of time steps may be determined appropriately in accordance with an embodiment.

A continuous state space is a space in which values of states can take continuous values. States (a start state, a goal state, and a candidate state), for example, relate to dynamic characteristics of an agent that change in accordance with a time elapse such as a position, a speed, a direction, and the like. Characteristics employed as the states may be selected appropriately in accordance with an embodiment. The states may include a plurality of types of characteristics. As one example, a state may include at least any one of a position, a speed, and a direction. In a case in which a position is included in characteristics employed as states, a continuous state space corresponds to a space representing a position at which an agent is present, a transition on the continuous state space corresponds to movement, and route planning problems of multiple agents correspond to problems of planning a movement route of each agent.

The start state is a state in which a transition is started on a continuous state space (for example, a start place of movement, a current place). The goal state is a state that is a target for a transition on a continuous state space (for example, a destination of movement). A range that a value of the state can take may be arbitrarily defined. In one example, the range that the value of the state can take may be defined as a limited range such as a range from a speed of 0 to a maximum speed.

(Various Kinds of Information)

The target agent information 41 is configured to include information representing a goal state of a target agent in a continuous state space and a candidate state in a target time step. In addition to such information, the target agent information 41 may further include other information that can be used for constructing a roadmap of the target agent (more specifically, estimation of node disposition). In this embodiment, the target agent information 41 may be configured to further include a candidate state of the target agent, an attribute of the target agent (attribute information), a direction flag, and a cost-to-go characteristic in a time step before the target time step.

A time step that can be handled as a previous time step (hereinafter, also referred to as "past time step") depends on a time step that is of interest as a target time step. When an estimation process using the roadmap constructing model 5 is repeated, the number of time steps that can be handled as past time steps is increased. The number of time steps handled as past time steps may not be particularly limited and may be determined appropriately in accordance with an embodiment. In a case in which a plurality of time steps are present before a target time step, at least some of the plurality of time steps may be handled as past time steps.

In one example, all the time steps before a target time step may be handled as past time steps. However, information of past time steps is referred to for estimating a disposition of a next node that is appropriate from a disposition history of nodes of a target agent. When there is information of at least a part of a disposition history of nodes, the information can be used as a clue for estimating an appropriate disposition of nodes in a next time step. For this reason, all the time steps before a target time step do not necessarily need to be handled as past time steps. In another example, an arbitrary number of time steps before a target time step may be handled as past time steps. Typically, an arbitrary number of time steps immediately before a target time step may be handled as past time steps.

In addition, in one example, one or more past time steps may include a time step immediately before a target time step. However, the past time step does not necessarily need to be a time step that is immediately before. The past time step may be configured not to include a time step that is immediately before a target time step. In a case in which there is no time step that is before a target time step, the information representing candidate states in a past time step may be omitted.

In addition, giving of information representing candidate states in a past time step to the first processing module 51, for example, may include giving of information representing a candidate state in the target time step to a model having a recursive structure such as a recursive-type neural network or the like in a time series. In this case, when information representing candidate states in past time steps is not explicitly included in the target agent information 41, this information may be handled such that it is assumed to be included in the target agent information 41.

The attribute relates to static characteristics of an agent that basically do not change in accordance with elapse of time, for example, such as a size, a shape, a maximum speed, a weight, and the like. Attribute information included in the target agent information 41 is appropriately configured such that it represents attributes of a target agent. Characteristics employed as attributes may be selected appropriately in accordance with an embodiment. The attribute may include a plurality of types of characteristics. As one example, the attribute of a target agent may include at least one of a size, a shape, a maximum speed, and a weight. The maximum speed represents an amount of maximum movement per unit time. The maximum speed may be determined to be an arbitrary index. As one example, the maximum speed may be a limit value of a capability of an agent or a regulated value (for example, a legal speed limit).

The direction flag is configured such that it represents a direction in which a target agent transitions (is urged to transition) in a continuous state space over a target time step to a next time step. The cost-to-go characteristic is a characteristic vector representing whether or not it becomes closer to a goal state from a candidate state (a node) of a target time step in each arbitrary transition direction (for example, in the case of two dimensions, each position of a rectangular area of $K \times K$ having this candidate state as its center) in a continuous state space using a numerical value.

The other agent information 43 is configured to include information representing goal states of other one or more agents and candidate states in a target time step in a continuous state space. Similar to the target agent information 41, the other agent information 43 may further include other information relating to other agents, which can be used for constructing a roadmap of a target agent, in addition to such information. In this embodiment, the other agent information 43 may be configured to further include candidate states of other agents in a time step (a past time step) before the target time step, attributes (attribute information) of other agents, and a cost-to-go characteristic.

The information representing candidate states of past time steps, the attribute information, and the cost-to-go characteristic included in the other agent information 43 may be configured similar to that of the target agent information 41 except that it relates to the other agents. In other words, regarding the other agent, in a case in which a plurality of time steps are present before the target time step, at least some of the plurality of time steps may be handled as past time steps of the other agent. In a case in which there is no time step before the target time step, the information representing candidate states of past time steps may be omitted in the other agent information 43. In addition, giving of information representing candidate states in a past time step to the second processing module 52, for example, may include giving of information representing a candidate state in the target time step to a model having a recursive structure such as a recursive-type neural network or the like in a time series. In this case, when information representing candidate states in past time steps is not explicitly included in the other agent information 43, this information may be handled such that it is assumed to be included in the other agent information 43. Attribute information included in the other agent information 43 is configured appropriately such that it represents attributes of the other agent. Characteristics employed as an attribute may be selected appropriately in accordance with an embodiment. The attribute may include a plurality of types of characteristics. As one example, the attribute of the other agent may include at least one of a size, a shape, a maximum speed, and a weight. The cost-to-go characteristic included in the other agent information 43 is a characteristic vector representing whether or not it becomes closer to a goal state from a candidate state of a target time step in each arbitrary transition direction in a continuous state space using a numerical value regarding the other agent.

In the procedure of repeating the estimation process using the roadmap constructing model 5, various kinds of information included in the target agent information 41, the other agent information 43, and the environmental information 45 may be appropriately updated such that it is appropriate for a time step of interest as a target time step in the estimation process. For example, information representing candidate states of a target agent and other agents in a target time step, which is included in the target agent information 41 and the other agent information 43 may be updated on the basis of an estimation result of candidate states acquired in the estimation process in the previous time step. On the other hand, information not changing while the estimation process (for example, a goal state of each agent) is repeated may be continuously used as it is. A data format of various kinds of information included in the target agent information 41, the other agent information 43, and the environmental information 45 may be not particularly limited and may be appropriately selected in accordance with an embodiment.

In one example of Fig. 2A, the roadmap constructing model 5 has a structure that can be separated into respective modules (51 to 53 and 55). In other words, in the roadmap constructing model 5, the modules (51 to 53 and 55) are disposed to be clearly differentiable from each other. However, the structure of the roadmap constructing model 5 is not limited to such an example. The roadmap constructing model 5 may be configured to be able to receive an input of each piece of the information (41, 43, and 45) in a target time step and output an estimation result of one or more candidate states (nodes) of the target agent in a next target time step. In another example, the modules (51 to 53 and 55) may be integrally configured at least in a part and may be disposed not to be able to clearly differentiable in accordance with this.

Approximate parts relating to input of the information (41, 43, and 45) may be perceived as processing modules 51 to 53, and approximate parts relating to output may be perceived as the estimation module 55. In addition, the processing modules 51 to 53 may be perceived as encoders that encode data including information representing candidate states in a target time step into characteristics information, and the estimation module 55 may be perceived as a decoder that restores candidate states of the next time step from the characteristics information.

(Process Example of Second Processing Module)

When a roadmap of a target agent is constructed, the number of other agents that are processing targets of the second processing module 52 may be selected appropriately in accordance with an embodiment. In one example, all the agents except for a target agent among a plurality of agents that are present may be handled as other agents. However, other agents having a low influence on a transition of a target agent have a low possibility of having an influence on a route of a roadmap of the target agent. For this reason, in another example, by omitting handling of such other agents having a low influence, high efficiency of the process may be achieved. As a specific example, an arbitrary number of agents present near the target agent may be handled as other agents. The number of other agents processed by the second processing module 52 may be a fixed number or a variable number.

Fig. 2B schematically illustrates one example of an arithmetic operation process of the second processing module 52 according to this embodiment. In one example illustrated in Fig. 2B, the second processing module 52 is configured to individually receive an input of the other agent information 43 of each of other agents and output characteristics information ($F_i$) and a priority level ($w_i$) for this other agent. The priority level represents a degree of importance given to information of a corresponding other agent when a roadmap of a target agent is constructed. The priority level may be deemed to be replaced with a weight, a degree of importance, or the like. As one example, in a case in which (M-1) other agents are present, by inputting the other agent information 43 of each of the other agents to the second processing module 52 and repeating the arithmetic operation process of the second processing module 52 (M-1) times, (M-1) pieces of characteristics information ($F_i$) and priority levels ($w_i$) can be acquired (here, i is an integer of 1 to M-1, and M is a natural number of two or more). The second processing module 52 is configured to include an arithmetic operation module executing a process of integrating estimation results (outputs) acquired using the following Equation 1.
[Math. 1]

$$F = \Sigma_i F_i W_i, \ W_i = \exp(w_i)/\Sigma_j \exp(w_j) \ \dots \ (1)$$

According to this second processing module 52, a result (F) of this integration process can be acquired as second characteristics information for an arbitrary number of other agents.

In addition, the configuration of the second processing module 52 for handling information of an arbitrary number of other agents is not limited to such an example. In another example, a maximum number of other agents to be handled may be defined in advance. The second processing module 52 may be configured to receive input of information of a maximum number of other agents and output characteristics information of each agent.

(Process of Machine Learning)

Referring back to Fig. 1, the learning data 3 is configured to include a goal state and a plurality of data sets in a correct answer route of each agent for learning. The agent for learning is an agent that is used for obtaining a correct answer route. The agent for learning may be the same as or different from a reasoning target agent (that is, an agent that becomes a target for a route plan). The correct answer route represents a route for a transition from a start state to a goal state of a agent for learning. The correct answer route may be manually obtained or may be obtained from an arithmetic operation result according to an arbitrary algorithm. In addition, the correct answer route may be obtained on the basis of an arbitrary index. As one example, in a case in which a position is handled as a state, the correct answer route may be a short-distance route, a fast-reachable route, a low-cost route, or the like.

Each data set is composed of a combination of a state of a first time step and a state of a second time step of each agent for learning. The first time step may be an arbitrary time step in a correct answer route. In a case in which a first time step is selected as the first time step, a state of the first time step may be composed of a start state in the correct answer route. The second time step is a time step next to the first time step.

Machine learning of the roadmap constructing model 5 is configured using the following processes. In other words, in the machine learning of the roadmap constructing model 5, the model generating device 1 handles one agent for learning among a plurality of agents for learning as a target agent and handles at least some of the remaining agents for learning other than the one agent for learning among the plurality of agents for learning as other agents. The model generating device 1, for each data set, gives a state of one agent for learning in the first time step to the first processing module 51 as a candidate state of the target agent in a target time step and gives states of at least some of the remaining agents for learning in the first time step to the second processing module 52 as candidate states of the other agents in the target time step, thereby training the roadmap constructing model 5 such that a candidate state of the target agent in a next time step, which is estimated by the estimation module 55, is appropriate for a state of the one agent for learning in the second time step. As a result of this machine learning, the trained roadmap constructing model 5 that has obtained a capability of estimating an appropriate candidate state of the target agent in a next time step from candidate states of the target agent and other agents in the target time step can be generated.

[Route Planning System]

Meanwhile, the route planning system 2 according to this embodiment is at least one computer configured such that it solves route planning problems of multiple agents in a continuous state space using the trained roadmap constructing model 5 generated by the machine learning described above.

The route planning system 2 acquires target information 221 including a start state and a goal state of each of a plurality of agents in a continuous state space. By using the trained roadmap constructing model 5, the route planning system 2 constructs a roadmap 225 for each agent from the acquired target information 221.

The process of constructing the roadmap 225 for each agent is configured by executing the following process with each of a plurality of agents designated as a target agent. **In** other words, the route planning system 2 handles one agent among a plurality of agents as a target agent and handles at least some of the remaining agents among the plurality of agents as other agents. The route planning system 2 designates a start state of one agent represented by the acquired target information 221 as a candidate state of a target agent in a first target time step and estimates one or more candidate states in a next time step using the trained roadmap constructing model 5. Until a goal state or a state near the goal state of one agent is included in one or more estimated candidate states in a next time step, the route planning system 2 designates each of one or more estimated candidate states in a next time step as a candidate state in a new target time step and repeats estimation of a candidate state in a next time step using the trained roadmap constructing model 5. The route planning system 2 executes such a process by designating each of the plurality of agents as a target agent. As a result, the roadmap 225 can be constructed for each agent.

The route planning system 2 searches for a route of each agent from a start state to a goal state on the roadmap 225 constructed for each agent. Then, the route planning system 2 outputs information representing the retrieved route.

[Operations and Effects]

As above, in the model generating device 1 according to this embodiment, the trained roadmap constructing model 5 is generated by machine learning using learning data 3 acquired from a correct answer route of a plurality of agents for learning. According to this machine learning, the roadmap constructing model 5 can obtain a capability of constructing a roadmap based on an appropriate route from a start state to a goal state of an agent. Thus, in the route planning system 2, a roadmap 225 in which nodes are disposed in an appropriate route from a start state to a goal state of each agent (that is, a route desired to be searched) and a peripheral range thereof can be constructed for each agent. In accordance with this, compared to a conventional roadmap constructing method in which nodes are disposed in the entire space, in the constructed roadmap 225 for each agent, a range in which nodes are disposed can be narrowed down into a range that is appropriate for a route search of each agent. In other words, disposition of a node at a position that is useless in a search route of each agent can be omitted. For this reason, even when nodes are densely disposed on the roadmap 225, an increase in the number of nodes can be inhibited. Thus, according to this embodiment, when route planning problems of multiple agents are to be solved on a continuous state space, the possibility of finding a more optimal route for an agent is raised, and reduction of a cost required for a search can be achieved.

In addition, in one example, as illustrated in Fig. 1, the model generating device 1 and the route planning system 2 may be connected to each other through a network. A type of the network, for example, may be appropriately selected from among the Internet, a radio communication network, a mobile communication network, a telephone network, a dedicated network, and the like. However, the method of exchanging data between the model generating device 1 and the route planning system 2 is not limited to such an example and may be selected appropriately in accordance with an embodiment. In another example, data may be exchanged between the model generating device 1 and the route planning system 2 using a storage medium.

In the example illustrated in Fig. 1, the model generating device 1 and the route planning system 2 are separate computers. However, the configuration of the information processing system according to this embodiment may not be limited to such an example and may be determined appropriately in accordance with an embodiment. In another example, the model generating device 1 and the route planning system 2 may be an integrated computer. In a further another example, at least one of the model generating device 1 and the route planning system 2 may be configured using a plurality of computer.

§2 Configuration Example

[Hardware Configuration]

<Model Generating Device>

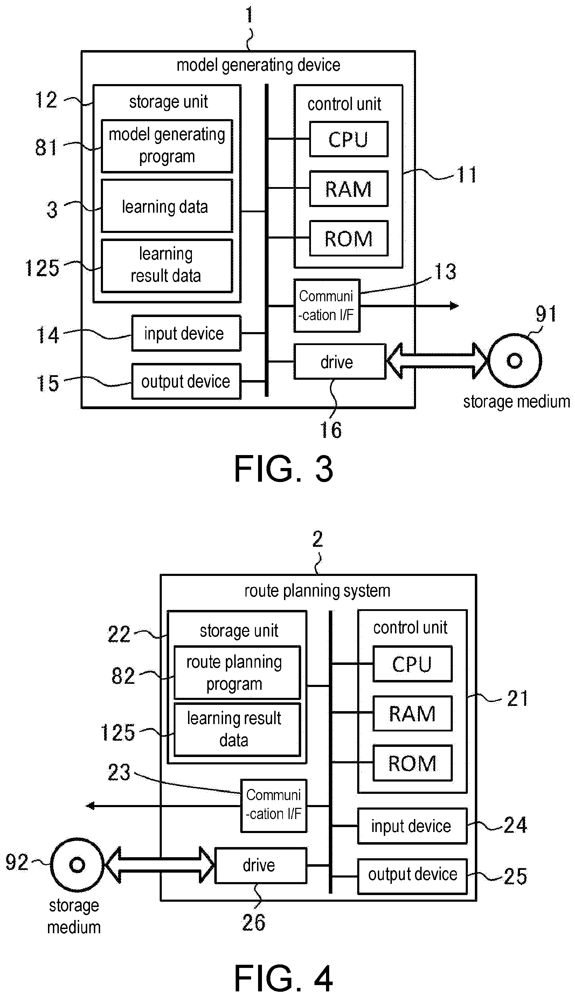

Fig. 3 schematically illustrates one example of a hardware configuration of the model generating device 1 according to this embodiment. As illustrated in Fig. 3, the model generating device 1 according to this embodiment is a computer in which a control unit 11, a storage unit 12, a communication interface 13, an input device 14, an output device 15, and a drive 16 are electrically connected to each other. In Fig. 3, the communication interface is described as "communication I/F". Also in Fig. 4 to be described below, a similar denotation will be used.

The control unit 11 includes a central processing unit (CPU) that is a hardware processor, a random access memory (RAM), a read only memory (ROM), and the like and is configured to execute information processing based on a program and various kinds of data. The control unit 11 (CPU) is one example of a processor•resource. The storage unit 12 is one example of a memory•resource and, for example, is configured using a hard disk drive, a solid-state drive, and the like. In this embodiment, the storage unit 12 stores various kinds of information such as a model generation program 81, learning data 3, learning result data 125, and the like.

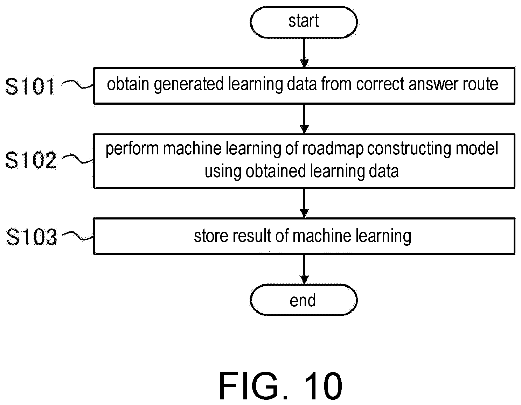

The model generation program 81 is a program used for causing the model generating device 1 to execute information processing (Fig. 10) of machine learning, which will be described below, generating the trained roadmap constructing model 5. The model generation program 81 includes a series of commands of this information processing. The learning data 3 is used for machine learning of the roadmap constructing model 5. The learning result data 125 represents information relating to a trained roadmap constructing model 5 generated using machine learning. In this embodiment, the learning result data 125 is generated as a result of execution of the model generation program 81.

The communication interface 13, for example, is a wired local area network (LAN) module, a wireless LAN module, and the like and is an interface for performing wired or wireless communication through a network. The model generating device 1 can perform data communication with another computer through the communication interface 13.

The input device 14, for example, is a device for performing input such as a mouse, a keyboard, and the like. The output device 15, for example, is a device for performing output such as a display, a speaker, and the like. By using the input device 14 and the output device 15, an operator can operate the model generating device 1. The input device 14 and the output device 15, for example, may be integrally configured using a touch panel display or the like.

The drive 16, for example, is a CD drive, a DVD drive, or the like and is a drive device used for reading various kinds of information such as programs and the like stored in a storage medium 91. At least one of the model generation program 81 and the learning data 3 described above may be stored in the storage medium 91.

The storage medium 91 is a medium that accumulates information such as a program and the like using an electrical, magnetic, optical, mechanical, or chemical action such that a computer, other devices, a machine, and the like can read various kinds of information such as the stored program and the like. The model generating device 1 may obtain at least one of the model generation program 81 and the learning data 3 described above from this storage medium 91.

Here, in Fig. 3, a disc-type storage medium such as a CD or a DVD is illustrated as one example of the storage medium 91. However, the type of the storage medium 91 is not limited to the disc type and may be a type other than the disc type. As a storage medium of a type other than the disc type, for example, there is a semiconductor memory such as a flash memory or the like. The type of the drive 16 may be selected appropriately in accordance with a type of the storage medium 91.

In addition, regarding a specific hardware configuration of the model generating device 1, omissions, substitutions, and additions of constituent elements can be made appropriately in accordance with an embodiment. For example, the control unit 11 may include a plurality of hardware processors. The hardware processor may be configured using a microprocessor, a field-programmable gate array (FPGA), a digital signal processor (DSP), or the like. The storage unit 12 may be configured using a RAM and a ROM included in the control unit 11. At least any one of the communication interface 13, the input device 14, the output device 15, and the drive 16 may be omitted. The model generating device 1 may be configured using a plurality of computers. In this case, the hardware configurations of the computers may coincide with each other or may not coincide with each other. In addition, the model generating device 1 may be an information processing device designed dedicatedly for a provided service, a general server apparatus, a general personal computer (PC), an industrial PC, or the like.

<Route Planning System>

Fig. 4 schematically illustrates one example of a hardware configuration of the route planning system 2 according to this embodiment. As illustrated in Fig. 4, the route planning system 2 according to this embodiment is a computer in which a control unit 21, a storage unit 22, a communication interface 23, an input device 24, an output device 25, and a drive 26 are electrically connected.

Each of the control unit 21 to the drive 26 of the route planning system 2 and the storage medium 92 may be configured respectively similar to the control unit 11 to the drive 16 of the model generating device 1 described above and the storage medium 91. The control unit 21 includes a CPU that is a hardware processor, a RAM, a ROM, and the like and is configured to execute various kinds of information processing based on a program and data. The control unit 21 (the CPU) is one example of a processor•resource. The storage unit 22 is one example of a memory•resource and, for example, is configured using a hard disk drive, a solid-state drive, and the like. In this embodiment, the storage unit 22 stores various kinds of information such as a route planning program 82, learning result data 125, and the like.

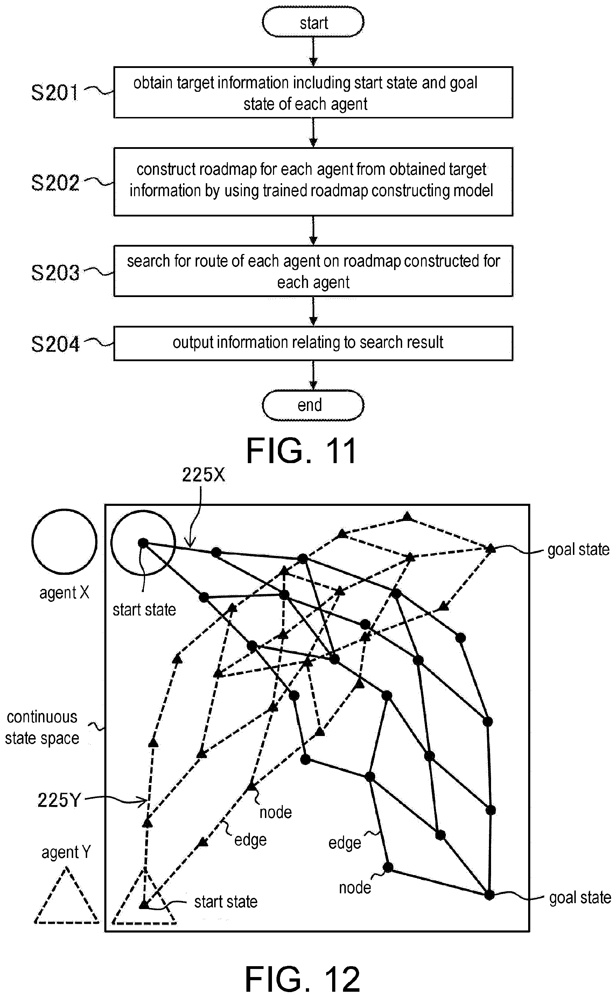

The route planning program 82 is a program for constructing a roadmap 225 for each agent using the trained roadmap constructing model 5 and causing the route planning system 2 to execute information processing (Fig. 11) to be described below for searching for a route of each agent on the constructed roadmap 225. The route planning program 82 includes a series of commands of this information processing. At least any one of the route planning program 82 and the learning result data 125 may be stored in the storage medium 92. The route planning system 2 may acquire at least one of the route planning program 82 and the learning result data 125 from the storage medium 92.

The route planning system 2 can perform data communication with another computer through the communication interface 23. An operator can operate the route planning system 2 by using the input device 24 and the output device 25.

In addition, regarding a specific hardware configuration of the route planning system 2, omissions, substitutions, and additions of constituent elements can be made appropriately in accordance with an embodiment. For example, the control unit 21 may include a plurality of hardware processors. The hardware processor may be configured using a microprocessor, an FPGA, a DSP, or the like. The storage unit 22 may be configured using a RAM and a ROM included in the control unit 21. At least any one of the communication interface 23, the input device 24, the output device 25, and the drive 26 may be omitted. The route planning system 2 may be configured using a plurality of computers. In this case, the hardware configurations of the computers may coincide with each other or may not coincide with each other. In addition, the route planning system 2 may be an information processing device designed dedicatedly for a provided service, a general server apparatus, a general PC, an industrial PC, or the like.

[Software Configuration]

<Model Generating Device>

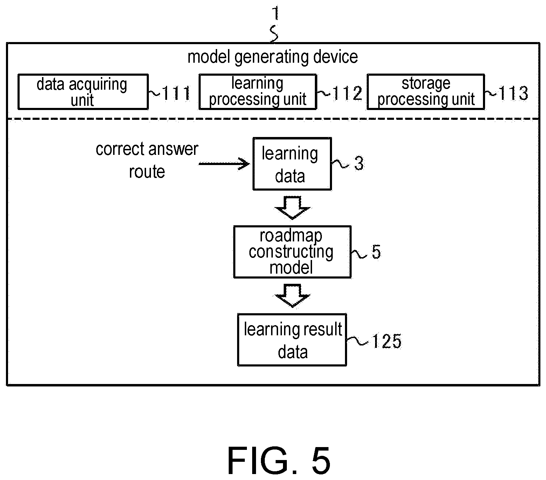

Fig. 5 schematically illustrates one example of a software configuration of the model generating device 1 according to this embodiment. The control unit 11 of the model generating device 1 expands the model generation program 81 stored in the storage unit 12 into the RAM. Then, the control unit 11 executes commands included in the model generation program 81 expanded into the RAM using the CPU. In accordance with this, as illustrated in Fig. 5, the model generating device 1 according to this embodiment is configured to include a data acquiring unit 111, a learning processing unit 112, and a storage processing unit 113 as software modules. In other words, in this embodiment, each software module of the model generating device 1 is realized by the control unit 11 (CPU).

The data acquiring unit 111 is configured to obtain learning data 3 generated from correct answer routes of a plurality of agents for learning. The learning processing unit 112 is configured to perform machine learning of the roadmap constructing model 5 by using the obtained learning data 3. The storage processing unit 113 is configured to generate information relating to the trained roadmap constructing model 5 generated using machine learning as learning result data 125 and store the generated learning result data 125 in a predetermined storage area. The learning result data 125 may be appropriately configured to include information for reproducing the trained roadmap constructing model 5.

(Example of Obtainment of Learning Data)

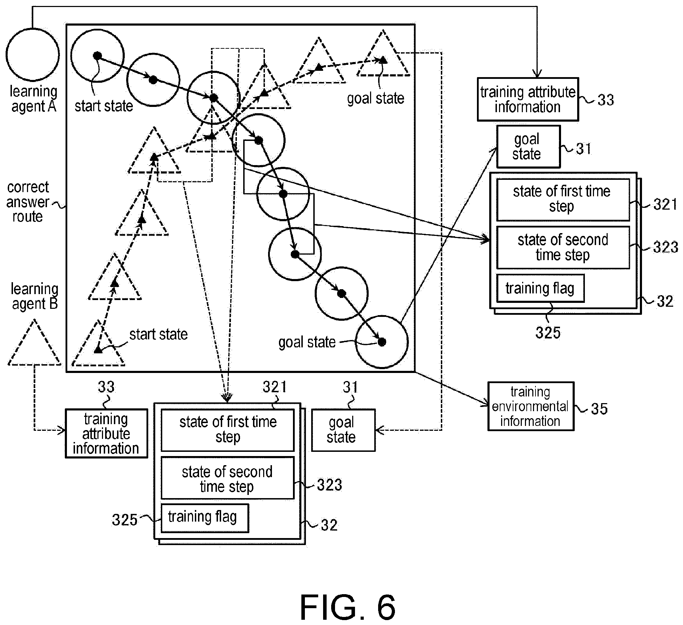

Fig. 6 schematically illustrates one example of a method of obtaining learning data 3 according to this embodiment. In one example illustrated in Fig. 6, a scene in which two agents (A and B) for learning obtain learning data 3 from one situation transitioning from mutually-different start states to different goal states is assumed. In one example of this situation, a correct answer route of the agent A for learning transitions from a start state of an upper left side to a goal state of a lower right side in 7 time steps, and a correct answer route of the agent B for learning transitions from a start state of a lower left side to a goal state of an upper right side in 7 time steps. In addition, various kinds of information illustrated in Fig. 6 such as the number of agents for learning, a start state and a goal state of each agent for learning, each state composing a correct answer route, the number of time steps reaching from a start state to a goal state, and the like is merely one example for the convenience of description. The situation for acquiring the learning data 3 is not limited to such an example.

The learning data 3 may be generated appropriately from information representing a correct answer route of each agent for learning such that it includes information that can be used for configuring a plurality of sets of a combination of training data and correct answer data (a teacher signal, label) in machine learning. In machine learning, training data is given to each of the processing modules 51 to 53 of the roadmap constructing model 5. The correct answer data is used as a true value of a candidate state of a target agent in a next time step that is estimated by the estimation module 55 by giving the training data thereto.

In this embodiment, target agent information 41 given to the first processing module 51 may be configured to include a goal state of a target agent, a candidate state in a target time step, candidate states in past time steps, attributes, a direction flag, and cost-to-go characteristics. The other agent information 43 given to the second processing module 52 may be configured to include goal states of other agents, candidate states in a target time step, candidate states in past time steps, attributes, and cost-to-go characteristics. The environmental information 45 given to the third processing module 53 may be configured to include information relating to obstacles.

In accordance with this, the learning data 3 may be configured to include a goal state 31, a plurality of data sets 32, training attribute information 33 of each agent for learning, and training environmental information 35 in a correct answer route of each agent for learning. Each data set 32 may be configured to include a state 321 of a first time step, a state 323 of a second time step, a training flag 325, and a training cost-to-go characteristic (not illustrated). The training flag 325 is configured to represent a direction from the state 321 of the first time step to the state 323 of the second time step in a continuous state space. The training flag 325 is used as training data of a direction flag.

As illustrated in Fig. 6, information representing the goal state 31 of each agent (A, B) for learning can be acquired from information of a final state (a goal state) in the correct answer route of each agent (A, B) for learning.

Each data set 32 of each agent (A, B) for learning can be acquired from information of a combination of continuous two time steps (a first time step and a second time step) in a correct answer route of each agent (A, B) for learning. An arbitrary time step from a start state to a state immediately before a goal state may be selected as the first time step, and the second time step may be a time step next to a time step selected as the first time step. In one example illustrated in Fig. 6, in a correct answer route of each agent (A, B) for learning, seven combinations of the first time step and the second time step can be formed.

As one example of the method of obtaining each data set 32, a combination of two continuous time steps is formed in a correct answer route of each agent (A, B) for learning. States of the two continuous time steps of the formed combination can be acquired as a state 321 of the first time step and a state 323 of the second time step. Subsequently, by generating information representing a direction of the state 323 of the second time step from the state 321 of the first time step, a training flag 325 can be acquired. By generating a characteristic vector expressing whether or not it becomes closer to the goal state 31 from the state 321 of the first time step in each arbitrary transition direction using a numerical value, a training cost-to-go characteristic can be acquired. Then, by associating the state 321 of the first time step, the state 323 of the second time step, the training flag 325, and the training cost-to-go characteristic that have been acquired, each data set 32 of each agent (A, B) for learning can be acquired. As one example, Fig. 6 illustrates a scene in which two data sets 32 are acquired for each of the agents (A, B) for learning. The state 321 of the first time step, the training flag 325, and the training cost-to-go characteristic configure training data of information of the target time step, and the state 323 of the second time step configures correct answer data (a teacher signal, label) of a candidate state of a next time step.

In addition, at least one of the training flag 325 and the training cost-to-go characteristic may be generated in advance before being used in machine learning or may be generated when it is used in machine learning. In addition, in one example, each data set 32 may be configured to further include information representing a state (not illustrated) in a time step (a past time step) before the first time step. However, when information representing a time series of a correct answer route is maintained, information representing a state in a past time step can be acquired from a data set 32 generated in accordance with a combination of time steps before the data set 32 of the target. For this reason, in another example, each data set 32 may not include information representing a state in a past time step. Also in a case in which the first processing module 51 and the second processing module 52 are configured using a model having a recursive structure, and information of a past time step is referred to by giving the target agent information 41 and the other agent information 43 in a time series, similarly, each data set 32 may not include information representing a state in a past time step.

The training attribute information 33 of each agent (A, B) for learning can be appropriately acquired from information of each agent (A, B) for learning. In one example, the training attribute information 33 may be configured such that it represents at least one of a size, a shape, a maximum speed, and a weight of an agent for learning. The training attribute information 33 of each agent (A, B) for learning may be acquired from each agent (A, B) for learning, may be acquired in accordance with a manual input, or may be acquired from another computer, an external storage device, or the like. A method of acquiring the training attribute information 33 may not be particularly limited and may be selected appropriately in accordance with an embodiment.

The training environmental information 35 can be acquired appropriately from information of an environment of a situation from which the correct answer route has been acquired. The training environmental information 35 may include information relating to obstacles. The obstacles, for example, may be a wall, a package, animals (a human and an animal other than a human), a level difference (stairs), and the like. The information relating to an obstacle, for example, may include information representing attributes of the obstacle such as presence/absence, a position, a size, a presence range, a shape, and the like of an obstacle. In the environment of a situation from which a correct answer route is acquired, an arbitrary obstacle may be present, or no obstacle may be present. The information relating to an obstacle may be appropriately acquired from information of obstacles in this environment.

As above, various kinds of information configuring the learning data 3 (the goal state 31 in the correct answer route of each agent for learning, a plurality of data sets 32, training attribute information 33 of each agent for learning, and the training environmental information 35) can be acquired. Such information can be obtained for each situation in which a correct answer route of each agent for learning can be obtained. The number of situations in which such information is obtained may not be particularly limited and may be determined appropriately in accordance with an embodiment. A situation in which such information is obtained may be realized in a real space or may be simulated in a virtual space. By collecting such information from each situation, learning data 3 can be generated.

**In** addition, each agent for learning is an agent that is provided for obtainment of the learning data 3. Each agent for learning may be an agent (a real agent) present in a real space or may be an agent that is virtual (a virtual agent). A correct answer route of each agent for learning may be manually acquired or may be acquired from a result of an arithmetic operation according to an arbitrary algorithm (for example, a known search algorithm). A correct answer route may be also acquired from a result of performance of a state transition of an arbitrary agent in the past. A data set 32 in the above-described various kinds of information configuring the learning data 3 may be acquired from at least a part of the acquired correct answer route of each agent for learning.

(One Example of Machine Learning Method)

The roadmap constructing model 5 is one or more arithmetic operation parameters for executing an arithmetic operation solving a task (an estimation process) and is configured using a machine learning model having one or more arithmetic operation parameters of which values are adjusted through machine learning. As long as an arithmetic operation process estimating a candidate state in a next target time step can be executed, a type, a configuration, and a structure of a machine learning model employed in the roadmap constructing model 5 may not be particularly limited and may be determined appropriately in accordance with an embodiment. The processing modules 51 to 53 and the estimation module 55 may be configured as a part of a machine learning model employed in the roadmap constructing model 5.

As one example, the roadmap constructing model 5 may be configured using a neural network. In this case, examples of the arithmetic operation parameters include a weight of coupling between nodes, a threshold of each node, and the like. The first processing module 51 and the second processing module 52, for example, may be configured using a multi-layer perceptron, a recursive-type neural network, or the like. The third processing module, for example, may be configured using a multi-layer perceptron, a convolution neural network, or the like. The estimation module 55 may be configured using a neural network or the like. Types of layers of the roadmap constructing model 5 (the processing modules 51 to 53 and the estimation module 55), the number of the layers, the number of nodes of each layer, and a connection relation of nodes may be determined appropriately in accordance with an embodiment.

In machine learning of the roadmap constructing model 5, the learning processing unit 112 handles one of a plurality of agents for learning as a target agent and handles at least some of the remaining agents for learning as other agents. Hereinafter, for the convenience of description, the agent for learning selected as the target agent will be also described as "a target agent for learning", and agents for learning selected as the other agents will be also described as "other agents for learning".

The learning processing unit 112 configures a combination of training data and correct answer data (a teacher signal, a label) from learning data 3 and trains the roadmap constructing model 5 such that an output acquired by giving training data is appropriate for correct answer data. In this embodiment, the learning processing unit 112 configures training data (target agent information for training) to be given to the first processing module 51 using the goal state 31 of the target agent for learning, the state 321 of the first time step, the training flag 325, the training cost-to-go characteristic, and the training attribute information 33 of each data set 32 in various kinds of information included in the learning data 3. The learning processing unit 112 configures training data (other agent information for training) to be given to the second processing module 52 using the goal state 31 of the other agent for learning, the state 321 of the first time step, the training cost-to-go characteristic, and the training attribute information 33 of each data set 32 in various kinds of information included in the learning data 3. The learning processing unit 112 configures training data to be given to the third processing module 53 using the training environmental information 35 in various kinds of information included in the learning data 3. The learning processing unit 112 configures correct answer data using the state 323 of the second time step of each data set 32 of the target agent for learning. A combination of training data and correct answer data corresponding to one data set 32 can be generated for each one data set 32. By giving the configured training data to each of the processing modules 51 to 53, an estimation result of a candidate state of a target agent in a next time step can be acquired from the estimation module 55. For each data set 32, by giving the training data described above to each of the processing modules 51 to 53, the learning processing unit 112 trains the roadmap constructing model 5 such that a candidate state of the target agent in a next time step, which is estimated by the estimation module 55, is appropriate for correct answer data (the state 323 of the second time step of a corresponding target agent for learning).

The training of the roadmap constructing model 5 is configured by adjusting (optimizing) values of arithmetic operation parameters of the roadmap constructing model 5 such that an output acquired for training data is appropriate for correct answer data. A method for solving an optimization problem may be selected appropriately in accordance with a type, a configuration, a structure, and the like of a machine learning model employed in the roadmap constructing model 5.

As one example of a machine learning method of a case in which the roadmap constructing model 5 is configured using a neural network, the learning processing unit 112 executes an arithmetic operation process of forward propagation of the processing modules 51 to 53 by giving training data configured from the learning data 3 to the processing modules 51 to 53. As a result of this arithmetic operation process, the learning processing unit 112 obtains characteristics information from each of the processing modules 51 to 53. The learning processing unit 112 gives the acquired characteristics information and a random number vector to the estimation module 55, thereby executing an arithmetic operation process of forward propagation of the estimation module 55. A value of the random number vector may be acquired appropriately. As a result of this arithmetic operation process, the learning processing unit 112 acquires a result of estimation of a candidate state of a target agent in a next time step. The learning processing unit 112 calculates an error between the acquired estimation result and corresponding correct answer data and further calculates a gradient of the calculated error. By performing backward propagation of the gradient of the calculated error using an error backward propagation method, the learning processing unit 112 calculates errors of the values of the arithmetic operation parameters of the roadmap constructing model 5 (the processing modules 51 to 53 and the estimation module 55). Then, the learning processing unit 112 updates the values of the arithmetic operation parameters on the basis of the calculated errors. The learning processing unit 112 adjusts the values of the arithmetic operation parameters of the roadmap constructing model 5 in accordance with this series of the update processes such that a sum of errors between estimation results acquired by giving training data and the correct answer data is small. The adjustment of values of the arithmetic operation parameters, for example, may be repeated until a predetermined condition such as a sum of calculated errors being a threshold or less is satisfied, which is executed a defined number of times. In addition, for example, conditions of machine learning such as a loss function, a learning rate, and the like may be set appropriately in accordance with an embodiment. In accordance with the process of this machine learning, the trained roadmap constructing model 5 can be generated.

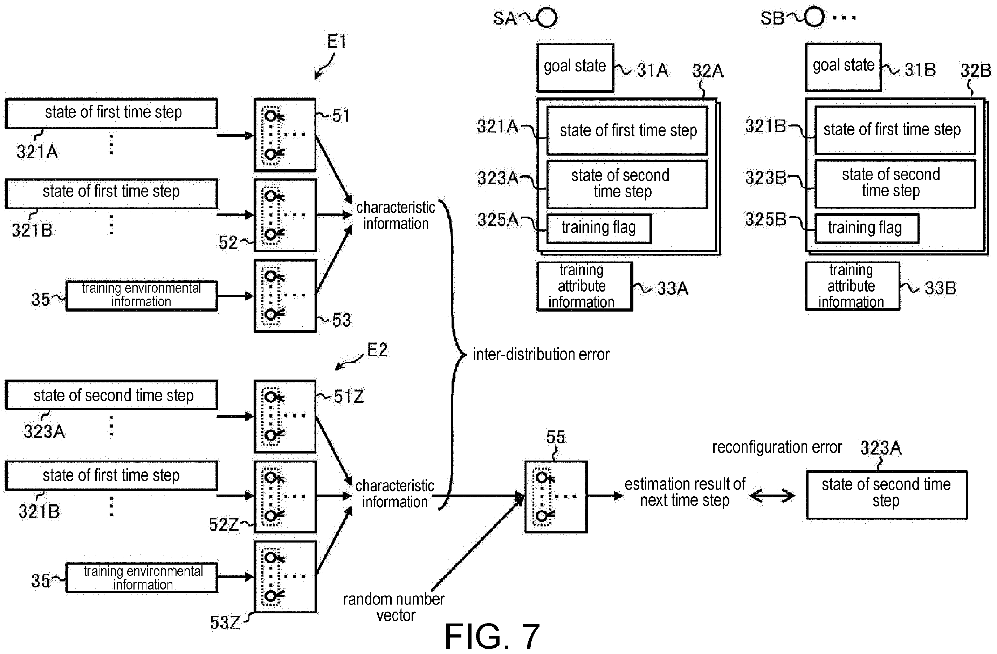

Fig. 7 schematically illustrates another example of a machine learning method of the roadmap constructing model 5 according to this embodiment. In one example of the machine learning method illustrated in Fig. 7, for machine learning of the roadmap constructing model 5, a first processing module 51Z, a second processing module 52Z, and a third processing module 53Z having the same configurations as the first processing module 51, the second processing module 52, and the third processing module 53 are prepared. For the convenience of description, the first processing module 51, the second processing module 52, and the third processing module 53 will be altogether referred to as a first encoder E1, and the first processing module 51Z, the second processing module 52Z, and the third processing module 53Z will be altogether referred to as a second encoder E2. In Fig. 7, "SA" represents an agent for learning that is handled as a target agent, and "A" is further attached to various kinds of information of the target agent SA for learning in the learning data 3. Similarly, "SB" represents an agent for learning that is handled as the other agent, and "B" is further attached to various kinds of information of the other agent SB for learning in the learning data 3.

In one example illustrated in Fig. 7, the learning processing unit 112 configures training data to be given to the first processing module 51 using the goal state 31A of the target agent SA for learning, the state 321A of the first time step, the training flag 325A, the training cost-to-go characteristic, and the training attribute information 33A of each data set 32A. The learning processing unit 112 configures training data to be given to the second processing module 52 using the goal state 31B of the other agent SB for learning, the state 321B of the first time step, the training cost-to-go characteristic, and the training attribute information 33B of each data set 32B. The learning processing unit 112 configures training data to be given to the third processing module 53 using the training environmental information 35. On the other hand, the learning processing unit 112 configures training data to be given to the first processing module 51Z by substituting the state 321A of the first time step of each data set 32A of the target agent SA for learning into the state 323A of the second time step and using information that is similar to the training data given to the first processing module 51 described above other than that. Training data given to the second processing module 52Z and the third processing module 53Z is similar to that given to the second processing module 52 and the third processing module 53. The learning processing unit 112 configures correct answer data using the state 323A of the second time step of each data set 32A of the target agent SA for learning.

The learning processing unit 112 gives the above-described training data configured from the learning data 3 to the first encoder E1 and executes an arithmetic operation process of forward propagation of the first encoder E1. As a result of this arithmetic operation process, the learning processing unit 112 obtains characteristics information from the first encoder E1. Similarly, the learning processing unit 112 gives the above-described training data configured from the learning data 3 to the second encoder E2 and executes an arithmetic operation process of forward propagation of the second encoder E2. As a result of this arithmetic operation process, the learning processing unit 112 obtains characteristics information from the second encoder E2.

The learning processing unit 112 calculates an error between distributions of characteristics information acquired from the encoders (E1 and E2) and further calculates a gradient of the calculated error between the distributions. By backwardly propagating the gradient of the calculated error to the first encoder E1 using an error backward propagation method, the learning processing unit 112 calculates an error of the value of the arithmetic operation parameter of the first encoder E1.

In addition, the learning processing unit 112 gives the characteristics information and the random number vector acquired from the second encoder E2 to the estimation module 55 and executes an arithmetic operation process of forward propagation of the estimation module 55. A value of the random number vector may be appropriately acquired. As a result of this arithmetic operation process, the learning processing unit 112 acquires a result of estimation of the candidate state of the target agent in a next time step from the estimation module 55. The learning processing unit 112 calculates a reconfiguration error between the acquired estimation result and corresponding correct answer data (the state 323A of the second time step) and further calculates a gradient of the calculated reconfiguration error. By backwardly propagating the gradient of the calculated error to the encoders (E1 and E2) and the estimation module 55 using an error backward propagation method, the learning processing unit 112 calculates errors of values of the arithmetic operation parameters of the encoders (E1 and E2) and the estimation module 55.

Then, the learning processing unit 112 updates the values of the arithmetic operation parameters of the encoders (E1 and E2) and the estimation module 55 on the basis of the calculated errors. The learning processing unit 112 adjusts the values of the arithmetic operation parameters of the roadmap constructing model 5 in accordance with this series of updating processes such that a sum of the calculated error between the distributions and the reconfiguration error is small. The adjustment of values of the arithmetic operation parameters, for example, may be repeated until a predetermined condition such as a sum of calculated errors being a threshold or less is satisfied, which is executed a defined number of times. In addition, for example, conditions of machine learning such as a loss function, a learning rate, and the like may be set appropriately in accordance with an embodiment. In accordance with the process of this machine learning, the trained roadmap constructing model 5 (the first encoder E1 and the estimation module 55) can be generated.

In addition, as described above, information representing states of past time steps may be appropriately obtained, and the training data given to the first processing module 51 and the second processing module 52 may further include information representing states of the acquired past time steps. Alternatively, by giving training data in a time series, information representing states of past time steps may be appropriately reflected in the roadmap constructing model 5 (the first processing module 51 and the second processing module 52). In a case in which a method illustrated in Fig. 7 is employed, this similarly applies also to the second encoder E2. In addition, a target agent for learning may be arbitrarily selected from a plurality of agents for learning. In the procedure of solving an optimization problem, for example, a target agent for learning may be changed at an arbitrary timing such as a time at which a series of updating processes is repeated.

The storage processing unit 113 generates learning result data 125 for reproducing the trained roadmap constructing model 5 generated using the machine learning described above. As long as the trained roadmap constructing model 5 can be reproduced, the configuration of the learning result data 125 may not be particularly limited and may be determined appropriately in accordance with an embodiment. As one example, the learning result data 125 may include information representing a value of each arithmetic operation parameter acquired through adjustment of the machine learning described above. Depending on the case, the learning result data 125 may further include information representing a structure of the roadmap constructing model 5. The structure, for example, may be identified using the number of layers from an input layer to an output layer, a type of each layer, the number of neurons included in each layer, a combination relation between neurons of layers adjacent to each other, and the like. The storage processing unit 113 stores the generated learning result data 125 in a predetermined storage area.

<Route Planning System>

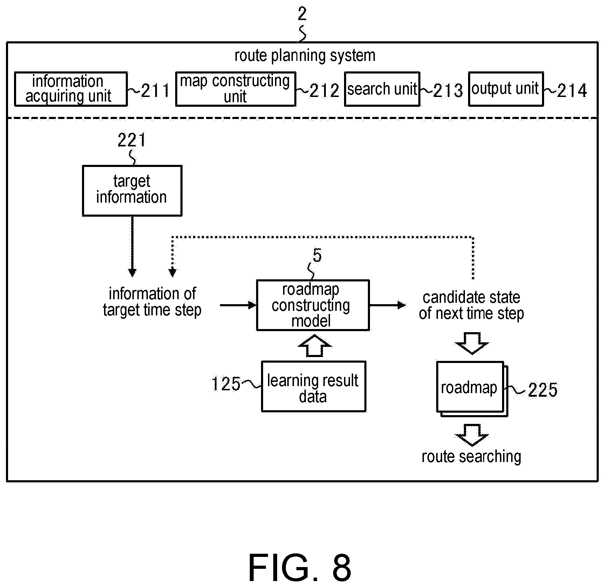

Fig. 8 schematically illustrates one example of a software configuration of the route planning system 2 according to this embodiment. The control unit 21 of the route planning system 2 expands the route planning program 82 stored in the storage unit 22 into a RAM. Then, the control unit 21 executes commands included in the route planning program 82 expended into the RAM using a CPU. In accordance with this, as illustrated in Fig. 8, the route planning system 2 according to this embodiment is configured to include an information acquiring unit 211, a map constructing unit 212, a search unit 213, and an output unit 214 as software modules. In other words, in this embodiment, similar to the model generating device 1, each software module of the route planning system 2 is also realized using the control unit 21 (CPU).

The information acquiring unit 211 is configured to obtain the target information 221 including a start state and a goal state of a transition of each of a plurality of agents in a continuous state space. By maintaining the learning result data 125, the map constructing unit 212 includes a trained roadmap constructing model 5. The map constructing unit 212 is configured to construct a roadmap 225 for each agent from the acquired target information 221 using the trained roadmap constructing model 5. The search unit 213 is configured to search for a route of each agent from a start state to a goal state using a predetermined route searching method on the roadmap 225 constructed for each agent. The output unit 214 is configured to output information that represents a retrieved route.

(One Example of Roadmap Constructing Procedure)

When the roadmap 225 of each agent is constructed, the target information 221 is used for configuring the target agent information 41. the other agent information 43, and the environmental information 45 to be given to the processing modules 51 to 53. In this embodiment, the target information 221 may be configured to further include information relating to an obstacle present in a continuous state space, information representing attributes (attribute information) of each agent, and a transition flag of each agent in each target time step in addition to the information representing a start state and a goal state of each agent. The attributes of each agent may include at least any one of a size, a shape, a maximum speed, and a weight. The transition flag is configured such that it represents a direction in which a transition is performed (a transition is prompted) in a continuous state space over a target time step to a next time step when each agent is handled as a target agent. The transition flag may be acquired every time a trial of the process of estimating a candidate state in a next time step is performed.

The map constructing unit 212 handles one of a plurality of agents as a target agent and handles at least some of the remaining agents other than the agent handled as the target agent as other agents. Hereinafter, an agent handled as a target agent among a plurality of agents will be referred to also as a "provisional target agent", and agents handled as other agents will be referred to also as "provisional other agents". By using the trained roadmap constructing model 5, the map constructing unit 212 estimates one or more candidate states of the provisional target agent in a next time step. By handling each agent as a target agent, one or more candidate states of each agent in a next time step can be acquired. The map constructing unit 212 repeats the use of the trained roadmap constructing model 5 such that a roadmap from a start state to a goal state of each agent is constructed. In accordance with this, a roadmap 225 for each agent can be constructed.

In the procedure of constructing a roadmap 225 for each agent, the use of the roadmap constructing model 5 includes configuring of the target agent information 41 using the information relating to the provisional target agent included in the target information 221 and giving of the configured target agent information 41 to the first processing module 51. The use of the roadmap constructing model 5 includes configuring of the other agent information 43 using the information relating to the provisional other agents included in the target information 221 and giving of the configured other agent information 43 to the second processing module 52. The use of the roadmap constructing model 5 includes configuring of the environmental information 45 from the information relating to obstacles included in the target information 221 and giving of the configured environmental information 45 to the third processing module 53.

More specifically, for each agent, by generating a characteristic vector expressing whether or not it becomes closer to a goal state from a start state included in the target information 221 in each arbitrary transition direction using a numerical value, the map constructing unit 212 acquires a cost-to-go characteristic given as information of an initial target time step. The map constructing unit 212 configures the target agent information 41 to be given to the first processing module 51 as information of an initial target time step (a first time step) by using the start state, the goal state, the attribute information, and the transition flag of a provisional target agent included in the target information 221 and the acquired cost-to-go characteristic. The map constructing unit 212 configures the other agent information 43 to be given to the second processing module 52 as information of an initial target time step by using the start states, the goal states, and the attribute information of provisional other agents included in the target information 221 and the acquired cost-to-go characteristic. In other words, the map constructing unit 212 designates a start state of the provisional target agent as a candidate state of the target agent in an initial target time step and designates a start state of the provisional other agent as a candidate state of the other agent in an initial target time step. The map constructing unit 212 configures the environmental information 45 to be given to the third processing module 53 from information relating to obstacles included in the target information 221.

The map constructing unit 212 gives the target agent information 41, the other agent information 43, and the environmental information 45 that have been configured to the processing modules 51 to 53 and executes an arithmetic operation process of the trained roadmap constructing model 5. In accordance with this, the map constructing unit 212 acquires estimation results of one or more candidate states of the provisional target agent in a next time step (second time step) from the estimation module 55. In this embodiment, by changing the value of the random number vector given to the estimation module 55 at the time of performing this estimation process, the map constructing unit 212 can acquire a plurality of mutually-different estimation results for a candidate state of the provisional target agent in a next time step. By handling each agent as a target agent and executing the arithmetic operation process described above, the map constructing unit 212 can acquire one or more candidate states of each agent in a next time step.

The map constructing unit 212 designates each of one or more estimated candidate states of each agent in a next time step (the (t+1)-th time step; t is a natural number of one or more) as a candidate state of each agent in a new target time step and repeats estimation of a candidate state in a next time step using the trained roadmap constructing model 5. More specifically, for each agent, by generating a characteristic vector expressing whether or not it becomes closer to a goal state from each of estimated one or more candidate states in each arbitrary transition direction as a numerical value, the map constructing unit 212 acquires a cost-to-go characteristic given as information of new target time step for each of the estimated one or more candidate states. The map constructing unit 212 configures the target agent information 41 to be given to the first processing module 51 as information of a new target time step by using estimated one or more candidate states, a goal state, attribute information, and a transition flag of a provisional target agent and the acquired cost-to-go characteristic. The map constructing unit 212 configures the other agent information 43 to be given to the second processing module 52 as information of a new target time step by using estimated one or more candidate states (an estimation result acquired by handling a provisional other agent as a target agent), goal states, and attribute information of provisional other agents and acquired cost-to-go characteristics. The map constructing unit 212 configures the environmental information 45 to be given to the third processing module 53 from the information relating to obstacles included in the target information 221. The map constructing unit 212 gives the target agent information 41, the other agent information 43, and the environmental information 45 (information of a new target time step) that have been configured to the processing modules 51 to 53 and executes an arithmetic operation process of the trained roadmap constructing model 5. In accordance with this, the map constructing unit 212 acquires estimation results of one or more candidate states of the provisional target agents in a time step next to the new target time step from the estimation module 55. By handling each agent as a target agent and executing the arithmetic operation process described above, the map constructing unit 212 can acquire one or more candidate states of each agent in a time step next to a new target time step.

In other words, the map constructing unit 212 updates the information representing the candidate states of each agent and the cost-to-go characteristic given as the target agent information 41 and the other agent information 43 in accordance with estimation results of one or more candidate states in a next time step acquired for each agent and executes the process of estimating candidate states in a next time step using the trained roadmap constructing model 5 again. Until a goal state or a state near the goal state of a provisional target agent is included in one or more estimated candidate states in a next time step, the map constructing unit 212 repeats the process of estimating candidate states of the provisional target agent in a next time step using this trained roadmap constructing model 5. The map constructing unit 212 designates each agent as a target agent and executes repetition of a series of the estimation processes described above. In accordance with this, a roadmap 225 for each agent can be constructed.

In addition, the transition flag may be acquired at an arbitrary timing in each time step. As one example, when an estimation result in which the candidate state is different is acquired by changing the value of the random number vector for each time step and each agent, the transition flag may be acquired. In accordance with this, for a node (candidate state) of the target time step, a direction in which a node (candidate state) of a next time step is disposed can be controlled. In addition, the transition flag may be acquired using an arbitrary method. For example, the transition flag may be acquired in accordance with a method using an instruction from an operator, randomly, selection based on an arbitrary index/a predetermined rule, or the like. As one example of the method of acquiring the transition flag on the basis of an arbitrary index or a predetermined rule, a direction in which a node (an estimation result of candidate states of a next target time step) is not present, or the number of nodes is small (for example, a density is a threshold or less) in a predetermined range having a direction in which it becomes closer to a goal state from a candidate state of a provisional target agent in a target time step as its center may be selected as a direction to be represented by the transition flag. In accordance with this, a direction in which nodes are disposed in the roadmap 225 to be constructed can be configured not to be biased.

In addition, in the target agent information 41 and the other agent information 43 to be given to the first processing module 51 and the second processing module 52 in each time step, information representing candidate state of each agent in past time steps may be included. In other words, the use of the trained roadmap constructing model 5 may include giving of a candidate state of a provisional target agent in a time step before a target time step to the first processing module 51 as a candidate state in a past time step and giving of candidate states of provisional other agents in a time step before the target time step to the second processing module 52 as a candidate state in a past time step when the process of estimating a candidate state of a next target time step is repeated. The information representing a candidate state of each agent in a past time step may be obtained appropriately from an estimation result of a candidate state acquired by a previous estimation process and a start state. Alternatively, in accordance with recursive structures of the first processing module 51 and the second processing module 52, by executing the estimation process described above in a time series, information of past time steps may be reflected.

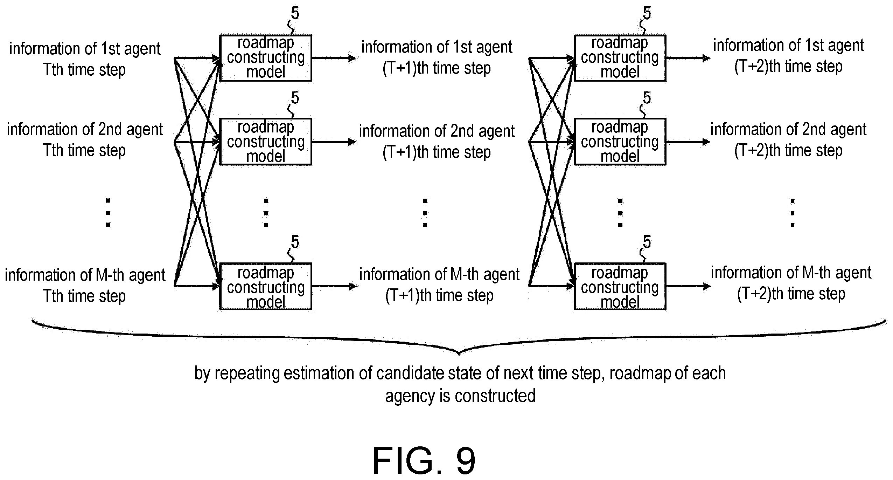

Fig. 9 schematically illustrates one example of a procedure of constructing a roadmap 225 of each agent using the trained roadmap constructing model 5 according to this embodiment. More specifically, Fig. 9 illustrates a part of the procedure in which the estimation process is executed by assuming that, when M agents are present, and one agent is handled as a target agent, all the remaining (M-1) agents are handled as other agents. However, as described above, the number of agents and the handling of the other agents are not limited to such an example.

In one example illustrated in Fig. 9, in the procedure of constructing a roadmap 225 of a first agent, the first agent is handled as a target agent, and 2nd to M-th agents are handled as other agents (an uppermost line in Fig. 9). In a stage in which the T-th time step is a target time step, the target agent information 41 is configured from information relating to the 1st agent in the T-th time step, and the other agent information 43 is configured from information of the 2nd to the M-th agent in the T-th time step. In accordance with this, as described above, in a stage in which the T-th time step is a target time step, input information to be given to the roadmap constructing model 5 at the time of handling the first agent as a target agent can be acquired.

This similarly applies also to a case in which each of the 2nd to the M-th agents is handled as a target agent. The target agent information 41 is configured from information relating to a provisional target agent in the T-th time step, and the other agent information 43 is configured from information relating to provisional other agents in the T-th time step. In a case in which the t-th time step is an initial target time step (T = 1), in candidate states of a provisional target agent and provisional other agents configuring the target agent information 41 and the other agent information 43, respective start states are designated. In the other cases (T is equal to or greater than 2), in candidate states of a provisional target agent and provisional other agents configuring the target agent information 41 and the other agent information 43, one of one or more candidate states that have been previously estimated is designated.

Then, by giving the acquired input information to the roadmap constructing model 5 and executing an arithmetic operation process of the roadmap constructing model 5, estimation results of one or more candidate states of the provisional target agent in a next time step can be acquired. In a stage in which the T-th time step is a target time step, in the procedure in which the first agent is handled as a target agent, estimation results of one or more candidate states of the first agent in the (T+1)-th time step can be acquired. In a next stage (that is, a stage in which the (T+1)-th time step is handled as a new target time step), in order to acquire input information to be given to the roadmap constructing model 5, information representing candidate states of the first agent in the target time step and the cost-to-go characteristic are updated on the basis of this estimation result. In accordance with this, information relating to the first agent in the (T+1)-th time step can be acquired. This similarly applies also to the 2nd to M-th agents. In the procedure of handling each agent as a target agent, estimation results of one or more candidate states of each agent in the (T+1)-th time step can be acquired. By updating the information representing candidate states in the target time step and the cost-to-go characteristic on the basis of the acquired estimation results, information relating to each agent in the (T+1)-th time step can be acquired.

By executing the estimation process for the provisional target agent using the roadmap constructing model 5 described above using the acquired information of each agent in the (T+1)-th time step, estimation results of one or more candidate states of each agent in the (T+2)-th time step can be acquired. Until a goal state or a state near the goal state is included in one or more estimated candidate states in a next time step, the estimation process using this trained roadmap constructing model 5 is repeatedly executed for each agent. In accordance with this, a roadmap 225 of each agent (in the example illustrated in Fig. 9, M roadmaps) can be constructed.

<Others>

In this embodiment, an example in which each of all the software modules of the model generating device 1 and the route planning system 2 is realized by a general CPU has been described. However, some or all of the software modules described above may be realized by one or a plurality of dedicated processors (for example, graphics processing units). Each of the modules described above may be realized as a hardware module. In addition, regarding the software configuration of each of the model generating device 1 and the route planning system 2, omissions, substitutions, and additions of software modules may be performed in accordance with an embodiment.

§3 Operation Example

[Model Generating Device]

Fig. 10 is a flowchart illustrating one example of a processing procedure of the model generating device 1 according to this embodiment. The processing procedure of the model generating device 1 described below is one example of a model generating method. However, the processing procedure of the model generating device 1 described below is merely one example, and each step may be changed as possibly. In addition, in the processing procedure of the model generating device 1 described above, omissions, substitutions, and additions of steps can be performed appropriately in accordance an embodiment.

(Step S101)

In Step S101, the control unit 11 operates as the data acquiring unit 111 and obtains learning data 3 generated from correct answer routes of a plurality of agents for learning.

The learning data 3 may be generated appropriately from correct answer routes of agents for learning using a method illustrated in Fig. 6. In this embodiment, the learning data 3 may be configured to include the goal state 31, a plurality of data sets 32, training attribute information 33 of each agent for learning, and training environmental information 35 in a correct answer route of each agent for learning. Each data set 32 may be configured to include a state 321 of a first time step, a state 323 of a second time step, a training flag 325, and a training cost-to-go characteristic.

The learning data 3 may be automatically generated in accordance with an operation of a computer or may be manually generated by including an operator's operation at least in a part. In addition, the generation of the learning data 3 may be performed by the model generating device 1 or may be performed by another computer other than the model generating device 1. The control unit 11 may generate the learning data 3 automatically or manually in accordance with an operator's operation through the input device 14. Alternatively, the control unit 11, for example, may obtain learning data 3 generated by another computer through a network, a storage medium 91, or the like. A part of the learning data 3 may be generated by the model generating device 1, and the other thereof may be generated by one or a plurality of computers.

An amount of various kinds of information obtained as the learning data 3 may not be particularly limited and may be appropriately determined such that machine learning can be performed thereon. When the learning data 3 is obtained, the control unit 11 causes the process to proceed to next Step S102.

(Step S102)

In Step S102, the control unit 11 operates as the learning processing unit 112 and performs machine learning of the roadmap constructing model 5 using the obtained learning data 3.

As one example, the control unit 11 performs initial setting of the machine learning model configuring the roadmap constructing model 5. A structure of the machine learning model and initial values of arithmetic operation parameters may be given using a template or may be determined in accordance with an operator's input. In a case in which additional learning or re-learning is performed, the control unit 11 may perform initial setting of the roadmap constructing model 5 on the basis of learning result data acquired through machine learning of the past.

Next, the control unit 11 handles one of a plurality of agents for learning as a target agent, handles at least some of the remaining agents for learning as other agents, and configures a combination of training data and correct answer data from the learning data 3. Training data to be given to the first processing module 51 is composed of a goal state 31 of the target agent for learning, a state 321 of a first time step, and a training flag 325 of each data set 32, a training cost-to-go characteristic, and training attribute information 33. Training data to be given to the second processing module 52 is composed of a goal state 31 of other agents for learning, a state 321 of a first time step and training cost-to-go characteristic of each data set 32, and training attribute information 33. Training data to be given to the third processing module 53 is composed of training environmental information 35. Correct answer data is composed of a state 323 of a second time step of each data set 32 of a target agent for learning. For each data set 32, by giving the training data described above to the processing modules 51 to 53, the control unit 11 adjusts values of arithmetic operation parameters of the roadmap constructing model 5 such that a candidate state of a target agent in a next time step that is estimated by the estimation module 55 is appropriate for the correct answer data.

In a case in which a neural network is employed in the roadmap constructing model 5 by employing a machine learning method illustrated in Fig. 7, the control unit 11 further prepares a second encoder E2 having the same configuration as the first encoder E1 in the initial setting described above. The configuration of the training data and the correct answer data to be given to each of the encoders (E1 and E2) is as described above. The training data to be given to the first processing module 51Z of the second encoder E2 is configured by substituting the state 321A of the first time step of each data set 32A in the information included in the training data to be given to the first processing module 51Z of the first encoder E1 with the state 323A of the second time step. Except for this point, the training data to be given to the second encoder E2 is similar to the training data to be given to the first encoder E1.

By giving respective training data to each of the encoders (E1 and E2) and executing an arithmetic operation process of forward propagation, the control unit 11 obtains characteristics information from each of the encoders (E1 and E2). The control unit 11 calculates an error (inter-distribution error) between characteristics information acquired from the encoders (E1 and E2). The control unit 11 adjusts values of arithmetic operation parameters of the first encoder E1 (each of the processing modules 51 to 53) using an error backward propagation method such that a sum of calculated errors between distributions is small. Together with this, by giving the characteristics information and the random number vector acquired from the second encoder E2 to the estimation module 55 and executing an arithmetic operation process of forward propagation of the estimation module 55, the control unit 11 obtains estimation results of candidate states of a target agent in a next time step from the estimation module 55. The control unit 11 calculates an error (a reconfiguration error) between the acquired estimation result and corresponding correct answer data (a state 323A of the second time step). The control unit 11 adjusts values of the arithmetic operation parameters of the first encoder E1, the second encoder E2, and the estimation module 55 using an error backward propagation method such that a sum of calculated reconfiguration errors is small. As a result of the process of this machine learning, a trained roadmap constructing model 5 that has obtained a capability of estimating an appropriate candidate state of a target agent in a next time step from candidate states of the target agent and other agents in the target time step can be generated.

In addition, in this embodiment, the training flag 325 is included in each sample of the training data. According to the training flag 325, a transition direction of a sample used in machine learning can be managed. In accordance with this, the training data can be used in machine learning such that a transition of each direction is trained without any bias. As one example, the control unit 11 may count the number of samples of each transition direction by referring to the training flag 325. Then, the control unit 11 may extract (samples) a sample of each transition direction with a probability of the reciprocal of the acquired number of samples in the machine learning described above. The transition direction, for example, may be defined to have a width of a certain degree in a vertical direction, a horizontal direction, or the like. As another example, the control unit 11 may adjust the number of samples of each transition direction such that the numbers of samples of respective transition directions are uniform (are the same or have a difference of a threshold or less). As one example of the adjustment method, in a transition direction of the number of samples that is smaller than those of other transition directions, the control unit 11, for example, may execute a process of increasing the number of samples using a method of replication, data extension, or the like. By training a transition of each direction without any bias using the training flag 325, a trained roadmap constructing model 5 in which it is difficult for a direction in which nodes are disposed to be biased can be generated.

When the process of the machine learning is completed as described above, the control unit 11 causes the process to proceed to next Step S103.

(Step S103)

In Step S103, the control unit 11 operates as the storage processing unit 113 and generates information relating to the trained roadmap constructing model 5 generated using machine learning as learning result data 125. The control unit 11 stores the generated learning result data 125 in a predetermined storage area.

The predetermined storage area, for example, may be a RAM of the inside of the control unit 11, the storage unit 12, an external storage device, or a storage medium, or a combination thereof. The storage medium, for example, is a CD, a DVD, or the like, and the control unit 11 may store the learning result data 125 in the storage medium through the drive 16. The external storage device, for example, is a data server such as a network attached storage (NAS) or the like. In this case, the control unit 11 may store the learning result data 125 in a data server through a network using the communication interface 13. In addition, the external storage device, for example, may be an externally-attached storage device connected to the model generating device 1.

When the storing of the learning result data 125 is completed, the control unit 11 ends the processing procedure of the model generating device 1 according to this operation example.

In addition, the generated learning result data 125 may be provided for the route planning system 2 at an arbitrary timing. For example, the control unit 11 may transmit the learning result data 125 to the route planning system 2 as the process of Step S103 or separately from the process of Step S103. By receiving this transmitted data, the route planning system 2 may obtain the learning result data 125. In addition, for example, by accessing the model generating device 1 or the data server through a network using the communication interface 23, the route planning system 2 may obtain the learning result data 125. Furthermore, for example, the route planning system 2 may obtain the learning result data 125 through the storage medium 92. In addition, for example, the learning result data 125 may be built in the route planning system 2 in advance.

Furthermore, by repeating the processes of Step S101 to Step S103 described above regularly or irregularly, the control unit 11 may update or newly generate the learning result data 125. When this repetition is performed, changes, modifications, additions, omissions, and the like of at least a part of the learning data 3 used in machine learning may be appropriately executed. Then, by providing the learning result data 125 that has been updated or newly generated for the route planning system 2 using an arbitrary method, the control unit 11 may update the learning result data 125 maintained by the route planning system 2.

[Route Planning System]

Fig. 11 is a flowchart illustrating one example of a processing procedure of the route planning system 2 according to this embodiment. The processing procedure of the route planning system 2 described below is one example of a route planning method. However, the processing procedure described below is merely one example, each step can be changed possibly. In addition, in the following processing procedure, omissions, substitutions, and additions of steps may be performed appropriately in accordance with an embodiment.

(Step S201)

In Step S201, the control unit 21 operates as the information acquiring unit 211 and acquires target information 221 including the start state and the goal state of a transition of each of a plurality of agents in a continuous state space.

In this embodiment, the control unit 21 may obtain information representing the start state and the goal state of each agent, information relating to obstacles present in a continuous state space, information representing the attributes of each agent (attribute information), and a transition flag of each agent in each target time step as the target information 221. Various kinds of information, for example, may be obtained using an arbitrary method such as information processing, an operator's input, acquisition from the storage unit 22, acquisition from an external device (for example, another computer, a storage medium, an external storage device, or the like), or the like. At least a part of the various kinds of information may be stored in the route planning system 2 in advance or may be acquired using an arbitrary method at the time of use. When the target information 221 is obtained, the control unit 21 causes the process to proceed to next Step S202.

(Step S202)

In Step S202, the control unit 21 operates as the map constructing unit 212 and sets the trained roadmap constructing model 5 by referring to the learning result data 125. Then, the control unit 21 constructs a roadmap 225 for each agent from the obtained target information 221 by using the trained roadmap constructing model 5.

As described above, the control unit 21 handles one of a plurality of agents as a target agent and handles at least some of the remaining agents other than the agent handled as the target agent as other agents. The control unit 21 configures target agent information 41 and other agent information 43 from the information of each agent included in the target information 221. The control unit 21 configured environmental information 45 from the information relating to obstacles included in the target information 221. The configuration of the target agent information 41, the other agent information 43, and the environmental information 45 is as described above. In addition, in a case in which the environmental information 45 is configured to further include information other than the information relating to obstacles, the control unit 21 may obtain this information in an environment of a target for which a route search is performed as the target information 221 and configure the environmental information 45 that further includes this obtained information. Information relating to an environment of a target for which a route search is performed including this information and information relating to obstacles may be referred also to "target environmental information". The control unit 21 may obtain target environmental information as the target information 221 and configure the environmental information 45 to be given to the third processing module 53 using the obtained target environmental information.

The control unit 21 respectively gives the target agent information 41, the other agent information 43, and the environmental information 45 that have been configured to the processing modules 51 to 53 and executes an arithmetic operation process of the trained roadmap constructing model 5. In accordance with this, the control unit 21 acquires an estimation result of one or more candidate states of the provisional target agent in a next time step. In the configuration example illustrated in Fig. 2A, at the time of performing an estimation process, by changing the value of the random number vector to be given to the estimation module 55, in a candidate state of the provisional target agent in a next time step, the control unit 21 can acquire a plurality of mutually-different estimation results. By handling each agent as a target agent and executing the arithmetic operation process, the control unit 21 acquires one or more candidate states of each agent in a next time step.

In a case in which the acquired candidate state (node) cannot be reached from a candidate state (node) of a target time step, for example, due to any reason such as a collision with an obstacle or the like, the control unit 21 may discard or correct the acquired candidate state (node). As one example, the control unit 21 may discard the acquired candidate state and acquire a new candidate state of a next time step using another method such as random sampling or the like. As another example, by moving a node corresponding to the acquired candidate state to a near range on a continuous state space, the control unit 21 may correct the acquired candidate state. The movement direction may be arbitrarily determined. In addition, the near range may be determined appropriately using a threshold or the like.

In addition, in order to evaluate whether or not to employ an acquired candidate state (node), the control unit 21 may determine whether or not a candidate state (node) that can be substituted by a candidate state (node) acquired by an estimation process of the current stage is present among candidate states (nodes) that have been acquired until the previous estimation process. An index used for evaluating whether or not a substitution can be performed may be set appropriately in accordance with an embodiment. As one example, a candidate state (node) that can be connected to other candidate states (nodes) in the same manner as the candidate state (node) acquired in the current stage and is disposed in a near range of the candidate state (node) acquired in the current stage on a continuous state space may be evaluated as a candidate state that can be substituted. The near range in this evaluation may be determined appropriately in accordance with a threshold or the like. In a case in which a candidate state that can be substituted with the candidate state acquired in the current stage is not present, the control unit 21 may employ the acquired candidate state as it is. On the other hand, in a case in which a substitutable candidate state is present, the control unit 21 may postpone the employment of the acquired candidate state. Alternatively, the control unit 21 may integrate (for example, average) the substitutable candidate state and the acquired candidate state. The control unit 21 connects a candidate state (node) that can be reached from the candidate state that is acquired in the current stage among candidate states (nodes) that have been previously acquired and the candidate state acquired in the current stage using an edge.

When the estimation process of the target time step is completed, the control unit 21 uses each of one or more estimated candidate states of each agent in a next time step as a candidate state of each agent in a new target time step. In other words, by using acquired estimation results of one or more candidate states of each agent in a next time step, the control unit 21 updates the information representing candidate states of each agent and the cost-to-go characteristics given as the target agent information 41 and the other agent information 43. Then, the control unit 21 executes the estimation process using the trained roadmap constructing model 5 again.

The control unit 21 repeatedly executes the estimation process using this trained roadmap constructing model 5 until a goal state of a provisional target agent or a state near the goal state is included in the estimated one or more candidate states in the next time step. Whether or not an estimated candidate state is a near state (being disposed near the goal state) may be evaluated appropriately using a threshold or the like. In addition, in this embodiment, in the procedure of repeating the estimation process, information representing candidate states of each agent in past time steps may be given to the trained roadmap constructing model 5 as the target agent information 41 and the other agent information 43. Alternatively, by causing the trained roadmap constructing model 5 (the first processing module 51 and the second processing module 52) to have a recursive structure, information of past time steps may be appropriately reflected in the estimation process. In accordance with this, in estimating candidate states in a next time step, not only information of candidate states in the target time step but also information of candidate states in past time steps may be referred to. In addition, when the estimation process of candidate states is executed by handling each agent as a target agent, the transition flag may be newly acquired at an arbitrary timing such as a time when a trail of the process of estimating candidate states is performed in each time step. The transition flag, for example, may be acquired in accordance with a method using an instruction from an operator, randomly, selection based on an arbitrary index/a predetermined rule, or the like. In accordance with the process described above, the control unit 21 can construct a roadmap 225 of each agent.

In addition, regarding the estimation process of each agent in each time step, the control unit 21 may generate candidate states in a next time step with a predetermined probability using another algorithm (for example, a state randomly transitions) without executing the roadmap constructing model 5 described above. The predetermined probability may be appropriately set. In accordance with this, even in a case in which it is difficult to estimate appropriate candidate states using the trained roadmap constructing model 5 due to a route that can be taken by an agent being greatly different between a route planning problem acquiring the learning data 3 in a learning stage and a route planning problem in a reasoning stage, candidate states (nodes) generated using another algorithm is included in the roadmap, and thus route planning can be stably performed.

Fig. 12 schematically illustrates one example of a roadmap (225X, 225Y) of each of agents (X and Y) constructed using the trained roadmap constructing model 5 according to this embodiment. In one example illustrated in Fig. 12, two agents (X and Y) are present, the agent X plans to transition from an upper left side to a lower right side of a continuous state space, and the agent Y plans to transition from the lower left side to the upper right side. In this scene, the roadmap 225X (a solid line) represents one example of a roadmap 225 constructed for the agent X, and the roadmap 225Y (a dotted line) represents one example of a roadmap 225 constructed for the agent Y.

By using machine learning using learning data 3 acquired from correct answer routes of a plurality of agents for learning, the trained roadmap constructing model 5 obtains a capability of constructing a roadmap 225 on the basis of an appropriate route from a start state to a goal state of an agent. Thus, as illustrated in Fig. 12, in the constructed roadmap (225X and 225Y) of each of the agents (X and Y), nodes can be caused to be easily disposed in a range having a high possibility of presence of an optimal route from a start state to a goal state of each of the agents (X and Y), and it can be configured such that it is difficult for nodes to be disposed in the other range.

When construction of the roadmap 225 of each agent is completed, the control unit 21 causes the process to proceed to next Step S203.

(Step S203)

Referring back to Fig. 11, in Step S203, the control unit 21 operates as the search unit 213 and searches for a route of each agent from a start state to a goal state on the roadmap 225 constructed for each agent using a predetermined route searching method. The route searching method may be selected appropriately in accordance with an embodiment. In one example, a known route searching method such as a Conflict-based Search (CBS), priorities planning, or the like may be used for searching for a route of each agent. When the search of a route of each agent is completed, the control unit 21 causes the process to proceed to next Step S204.

(Step S204)

In Step S204, the control unit 21 operates as the output unit 214 and outputs information representing a retrieved route (hereinafter, referred to also as "search result information).

An output destination and details of information to be output may be determined appropriately in accordance with an embodiment. As one example, the control unit 21 may output information representing a retrieved route of each agent as it is. The output information may be used for each agent to perform a state transition. For example, in a case in which an agent is a human or a device operated by a human, this human may perform his or her state transition or an operation of this device on the basis of output information. As another example, in a case in which each agent can be controlled directly or indirectly through a control device, the control unit 21 may output a command instructing an operation of each agent in accordance with a search result of a route (in other words, urges each agent to perform a state transition according to a search result) as search result information. The output destination, for example, may be a RAM, the storage unit 22, the output device 25, another computer, an agent, or the like.

In addition, the number of agents that are targets for route planning may not be particularly limited and may be selected appropriately in accordance with an embodiment. In a case in which route planning is repeated, the number of agents may be changed. In addition, each agent that becomes a target for route planning may be an agent present in a real space (a real agent) or an agent that is virtual (virtual agent). Each agent may be the same as the agent for learning or may be different therefrom.

The type of each agent is not particularly limited as long as a state transition thereof can be performed and may be selected in accordance with an embodiment. Each agent, for example, may be a mobile body, a human, a device operated by a human, a manipulator, or the like. The device operated by a human, for example, may be a general vehicle or the like. In a case in which an agent is the manipulator, solving of a route planning problem may correspond to solving of an operation planning problem of the manipulator. The types of all the agents that become targets for route planning may be the same, or the type of at least some of the agents may be different from the type of the other agents. As one example, each agent may be a mobile body that is configured to autonomously move. The mobile body, for example, may be a mobile robot, an automatic driving vehicle, a drone, or the like. The mobile robot, for example, may be configured to move for the purpose of conveyance of a product, guidance, patrol, cleaning, or the like.

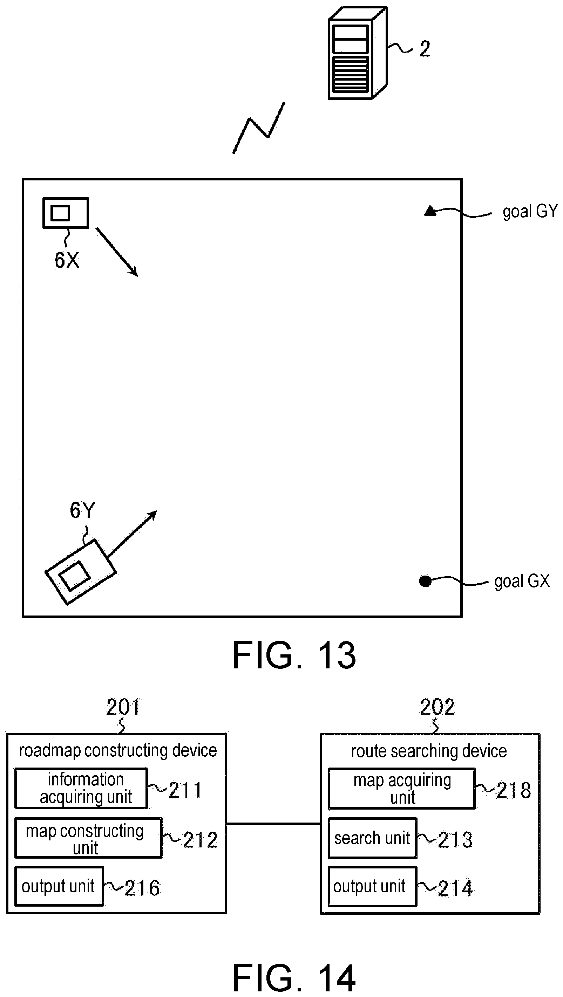

Fig. 13 schematically illustrates one example of an agent according to this embodiment. In a scene illustrated in Fig. 13, two mobile bodies (6X and 6Y) are present. The mobile body 6X positioned on an upper left side plans to move to a goal GX of a lower right side, and the mobile body 6Y positioned on a lower left side plans to move to a goal GY of an upper right side. A continuous state space is assumed to represent the positions of the mobile bodies (6X and 6Y). Each of the mobile bodies (6X and 6Y) is one example of the agent.

In this scene, the control unit 21 may search for a movement route up to each of the goals (GX and GY) of the mobile bodies (6X and 6Y) by handling each of the mobile bodies (6X and 6Y) as an agent and executing the processes of Step S201 to Step S203 described above. As one example of the process of this Step S204, by outputting acquired search result information to each of the mobile bodies (6X and 6Y), the control unit 21 may instruct the mobile bodies (6X and 6Y) to move according to search results.

When the output of the search result information is completed, the control unit 21 ends the processing procedure of the route planning system 2 relating to this operation example.

In addition, a situation in which route planning is performed may be occurring or have occurred in a real space or may be realized using a simulation on a virtual space. In accordance with this, the control unit 21 may execute a series of information processing of Step S201 to Step S204 at an arbitrary timing. A timing at which route planning is performed may be online or may be offline.

As one example, in a scene in which each agent is a mobile body, and each mobile body performs planning of a movement route (for example, Fig. 13), the route planning system 2 may obtain information of a current position and a destination of each mobile body in real time and online. The route planning system 2 may handle the current position as a start state and handle the destination as a goal state and execute the processes of Step S201 to Step S204 described above. In accordance with this, the route planning system 2 may perform planning of a movement route of each mobile body in real time. In addition, the route planning system 2 may update the plan of a movement route of each mobile body by obtaining information of a current position and a destination of each mobile body regularly or irregularly and executing the series of information processing of Step S201 to Step S204 described above again. When the series of information processing of Step S201 to Step S204 described above is repeated, the number of mobile bodies (agents) may be changed. In accordance with this, until each mobile body reaches a destination, route information that is appropriate for each mobile body may be continuously generated.

[Characteristics]

As above, in this embodiment, in the process of Step S102 described above, the trained roadmap constructing model 5 is generated using machine learning that uses the learning data 3 acquired from correct answer routes of a plurality of agents for learning. According to this machine learning, a trained roadmap constructing model 5 that has obtained the capability of constructing a roadmap on the basis of an appropriate route from a start state to a goal state of an agent can be generated. In the process of Step S202, by using this trained roadmap constructing model 5, as illustrated in Fig. 12, a roadmap 225 in which nodes are disposed by focusing on a range having a high possibility of presence of an optimal route can be constructed for each agent. In accordance with this, in the constructed roadmap 225 of each agent, a range in which nodes are disposed can be narrowed down into a range that is appropriate for a route search of each agent. Thus, even when nodes are densely disposed on the roadmap 225, an increase in the number of nodes can be inhibited. Thus, according to this embodiment, in the process of Step S203, when route planning problems of multiple agents are to be solved on a continuous state space, the possibility of finding a more optimal route for an agent is raised, and reduction of a cost required for a search can be achieved.

In addition, in this embodiment, the roadmap constructing model 5 includes the third processing module 53 that processes information of an environment including obstacles. In accordance with this, the trained roadmap constructing model 5 can estimate a disposition of nodes configuring the roadmap 225 of each agent with a status of the environment including obstacles taken into account. Thus, in the process of Step S202, a roadmap 225 that is appropriate for the environment can be constructed for each agent. As a result, in the process of Step S203, the possibility of finding an optimal route for an agent on a continuous state space is further raised, and further reduction of a cost relating to a search can be achieved.

In addition, in this embodiment, the first processing module 51 and the second processing module 52 may be configured to further process candidate states of past time steps as the target agent information 41 and the other agent information 43. In accordance with this, the trained roadmap constructing model 5 can estimate a disposition of nodes configuring the roadmap 225 of each agent with a state transition of each agent taken into account in a time series. Thus, in the process of Step S202, for an agent reaching from a start state to a goal state over a plurality of time steps, an appropriate roadmap 225 can be constructed. As a result, in the process of Step S203, the possibility of finding an optimal route for an agent on a continuous state space is further raised, and further reduction of a cost relating to a search can be achieved.

In addition, in this embodiment, the first processing module 51 may be configured to further process attribute information of a target agent as the target agent information 41. In accordance with this, the trained roadmap constructing model 5 can estimate a disposition of nodes configuring the roadmap 225 for each agent with attributes of each agent taken into account. Thus, even in a case in which agents having mutually-different attributes are present, in the process of Step S202, an appropriate roadmap 225 can be constructed for each agent. As a result, even in a case in which agents having mutually-different attributes are mixed, in the process of Step S203, route planning problems of multiple agents on a continuous state space can be appropriately solved. In addition, in one example, attributes of a target agent may include at least any one of a size, a shape, a maximum speed, and a weight. In accordance with this, in the process of Step S202, for restrictions relating to an outer shape, a speed, and a weight, an appropriate roadmap 225 can be constructed for each agent.

In addition, in this embodiment, the second processing module 52 may be configured to further process attribute information of another agent as the other agent information 43. In accordance with this, the trained roadmap constructing model 5 can estimate disposition of nodes that is appropriate for a target agent with attributes of the other agent taken into account. Thus, also under an environment in which agents having various attributes are present, in the process of Step S202, a roadmap 225 that is appropriate for each agent can be constructed. As a result, in the process of Step S203, the possibility of finding an optimal route for an agent on a continuous state space is further raised, and further reduction of a cost relating to a search can be achieved. In addition, in one example, attributes of other agents may include at least one of a size, a shape, a maximum speed, and a weight. In accordance with this, even when agents in which at least one of an outer shape, a speed, and a weight is different are mixed, in the process of Step S203, the possibility of finding an optimal route for each agent is further raised, and further reduction of a cost relating to a search can be achieved.

In addition, in this embodiment, the first processing module 51 may be configured to further process information of a direction flag representing a transition direction as the target agent information 41. In accordance with this, in the process of Step S102, on the basis of the training flag 325, training data can be used in machine learning such that a transition of each direction is trained without any bias. As a result, a trained roadmap constructing model 5 in which it is difficult for a direction in which nodes are disposed to be biased can be generated. Furthermore, by including an item of the direction flag in the target agent information 41, a trained roadmap constructing model 5 that has obtained the capability of controlling a direction in which nodes are disposed can be generated using the direction flag.

In accordance with this, in the process of Step S202, by using this trained roadmap constructing model 5, a direction in which nodes are disposed is not biased in the roadmap 225 of each agent. In a case in which nodes are disposed in a biased direction, by controlling a direction in which the nodes are disposed using the transition flag given as a direction flag, the direction in which the nodes are disposed can be controlled. In accordance with this, in the constructed roadmap 225, a selection width of a state transition can be prevented from being narrow. As a result, in the process of Step S203, the possibility of finding an optimal route for an agent on a continuous state space can be further raised.

§4 Modified Example

As above, although the embodiment of the present invention has been described in detail, the description presented above is merely an example of the present invention in every aspect. It is apparent that various improvements and modifications can be performed without departing from the scope of the appended claims of the present invention. For example, changes as below can be performed. In addition, hereinafter, similar reference signs will be used for constituent elements similar to those of the embodiment described above, and description of points that are similar to those of the embodiment described above is omitted as is appropriate. The following modified examples can be appropriately combined.

<4.1>

In the embodiment described above, the route planning system 2 is configured to execute a series of processes of acquiring the target information 221, constructing a roadmap 225 of each agent, and solving a route planning problem of each agent. However, a device configuration for executing each process may not be limited to such an example. As another example, a device constructing a roadmap 225 of each agent and a device searching for a route of each agent on a continuous state space using the acquired roadmap 225 may be configured by one or a plurality of separate independent computers.

Fig. 14 schematically illustrates one example of a configuration of a route planning system according to this modified example. In this modified example, the route planning system is configured using a roadmap constructing device 201 and a route searching device 202. The roadmap constructing device 201 is at least one computer configured to construct a roadmap 225 of each agent using the trained roadmap constructing model 5. The route searching device 202 is at least one computer configured to search for a route of each agent on the constructed roadmap 225.

The hardware configuration of the roadmap constructing device 201 and the route searching device 202 may be similar to the hardware configuration of the route planning system 2 described above. The roadmap constructing device 201 and the route searching device 202 may be directly connected or may be connected through a network. In one example, the roadmap constructing device 201 and the route searching device 202 may perform data communication with each other through such connection. In another example, data may be exchanged between the roadmap constructing device 201 and the route searching device 202 through a storage medium or the like.

A roadmap constructing program may be configured to include commands until the roadmap 225 is constructed among commands included in the route planning program 82. The roadmap constructing program may further include a command for outputting the constructed roadmap 225. By executing this roadmap constructing program, the roadmap constructing device 201 may be configured to include the information acquiring unit 211, the map constructing unit 212, and the output unit 216 as software modules. The output unit 216 may be configured to output the constructed roadmap 225 of each agent.

The route searching program may be configured to include commands until a route search is performed, and a search result is output among the commands included in the route planning program 82. The route searching program may further include a command for obtaining the roadmap 225 constructed for each agent. By executing this route searching program, the route searching device 202 may be configured to include the map acquiring unit 218, the search unit 213, and the output unit 214 as software modules. The map acquiring unit 218 may be configured to obtain the roadmap 225 constructed for each agent.

In addition, similar to the embodiment described above, some or all of the software modules of the roadmap constructing device 201 and the route searching device 202 may be realized using one or a plurality of dedicated processors. Each of the modules of the roadmap constructing device 201 and the route searching device 202 may be realized as a hardware module. In addition, regarding the software configuration of each of the roadmap constructing device 201 and the route searching device 202, omissions, substitutions, and additions of software modules may be performed in accordance with an embodiment.

In the roadmap constructing device 201 according to this modified example, the control unit operates as the information acquiring unit 211 and executes the process of Step S201 described above. Next, the control unit operates as the map constructing unit 212 and executes the process of Step S202 described above. In accordance with this, a roadmap 225 of each agent is constructed. Then, the control unit operates as the output unit 216 and outputs the constructed roadmap 225 of each agent. An output destination and an output method may be selected appropriately in accordance with an embodiment. The output destination may include the route searching device 202. The constructed roadmap 225 of each agent may be provided for the route searching device 202 at an arbitrary timing using an arbitrary method.

In the route searching device 202 according to this modified example, the control unit operates as the map acquiring unit 218 and obtains a roadmap 225 constructed for each agent. A route for obtaining a roadmap 225 of each agent may not be particularly limited and may be selected appropriately in accordance with an embodiment. Next, the control unit operates as the search unit 213 and executes the process of Step S203 described above. Then, the control unit operates as the output unit 214 and executes the process of Step S204 described above.

According to the roadmap constructing device 201 of this modified example, by using the trained roadmap constructing model 5, a roadmap 225 in which nodes are disposed can be constructed for each agent by focusing on a range having a high possibility of presence of an optimal route. Thus, even when nodes are densely disposed on the roadmap 225, an increase in the number of nodes can be inhibited. Thus, in the route searching device 202, when route planning problems of multiple agents are to be solved on a continuous state space, the possibility of finding a more optimal route for an agent is raised, and reduction of a cost required for a search can be achieved. The roadmap constructing device 201 according to this modified example can cause the route searching device 202 to have such operations and effects.

<4.2>

The method for machine learning of the roadmap constructing model 5 may not be limited to the method described above. The method for the machine learning of the roadmap constructing model 5 is not particularly limited as long as the capability of estimating a candidate state of a target agent in a next time step can be obtained from various kinds of information of a target time step and may be selected in accordance with an embodiment. As one example, adversarial learning may be employed in the method for machine learning of the roadmap constructing model 5.

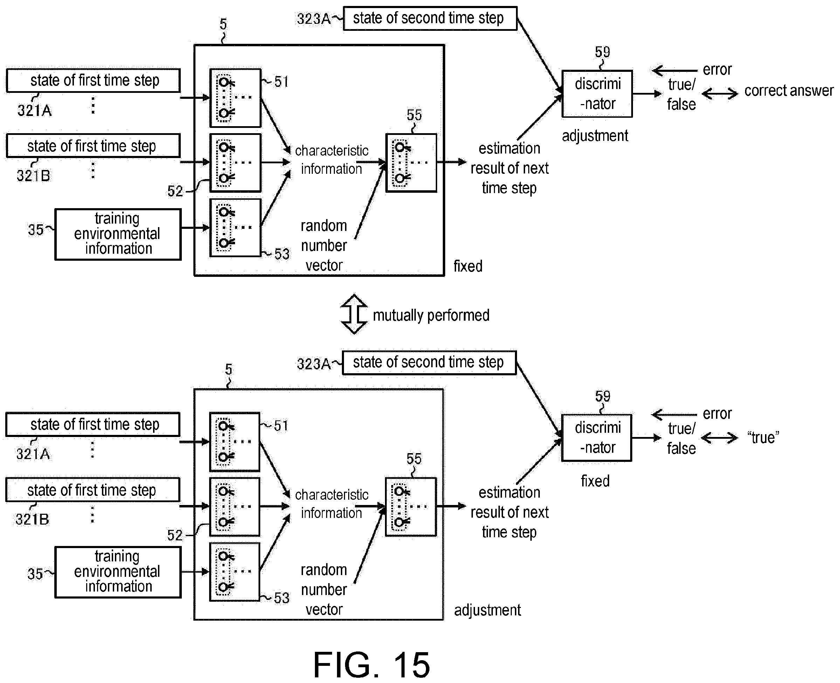

Fig. 15 schematically illustrates one example of a machine learning method of the roadmap constructing model 5 using adversarial learning according to this modified example. In one example illustrated in Fig. 15, in order to execute adversarial learning, a discriminator 59 is prepared for the roadmap constructing model 5. In the discriminator 59, a machine learning model including arithmetic operation parameters is used. The discriminator 59 is configured to execute a process of accepting input of a sample and discriminating whether the origin of the input sample is correct answer data or an estimation result acquired using the roadmap constructing model 5. The type of machine learning model used in the discriminator 59 is not particularly limited as long as it can execute this discrimination process and may be selected appropriately in accordance with an embodiment. In one example, in the discriminator 59, a neural network may be employed. The discriminator 59 may be configured to further accept input of various kinds of information given to the roadmap constructing model 5. In other words, in adversarial learning, at least a part of information (training data) given to the roadmap constructing model 5 may be input to the discriminator 59.

The adversarial learning is configured to include a first training step and a second training step. The first training step is configured by training the discriminator 59 such that the origin of input data is discriminated by using an estimation result of a candidate state and correct answer data of a next time step according to the roadmap constructing model 5 as the input data. The estimation result of the candidate state can be acquired by giving training data configured using information representing the state 321 of each data set 32 in the first time step and the like to the roadmap constructing model 5 and executing the arithmetic operation process of the roadmap constructing model 5. The correct answer data is configured using information representing the state 323 of each data set 32 in the second time step. The second training step is configured by training the roadmap constructing model 5 such that the discrimination performance of the discriminator 59 at the time of inputting the estimation result of the candidate state in a next time step according to the roadmap constructing model 5 to the discriminator 59 is degraded. In Fig. 15, being originated from correct answer data is expressed as "true", and being originated from an estimation result acquired by the roadmap constructing model 5 is expressed as "false". The method of expressing the origin of each sample may be appropriately changed.

As one example of the training process, the control unit 11 prepares the roadmap constructing model 5 and the discriminator 59 using the process of initial setting. The control unit 11 prepares training data and correct answer data from the learning data 3. The configuration of the training data may be similar to the training data given to the first encoder E1 described above. In other words, the training data given to the first processing module 51 may be configured using the goal state 3 1A of the target agent SA for learning, the state 321A of the first time step and the training flag 325A of each data set 32A, the training cost-to-go characteristic, and the training attribute information 33A. The training data given to the second processing module 52 may be configured using the goal state 31B of the other agent SB for learning, the state 321B of the first time step of each data set 32B, the training cost-to-go characteristic, and the training attribute information 33B. The training data given to the third processing module 53 may be configured using the training environmental information 35. The correct answer data may be configured using the state 323A of the second time step of each data set 32A of the target agent SA for learning.

The control unit 11 inputs each sample of training data to the roadmap constructing model 5 and executes the arithmetic operation process of the roadmap constructing model 5. In other words, by giving each sample of training data to each of the processing modules 51 to 53 and executing the arithmetic operation process of each of the processing modules 51 to 53, the control unit 11 obtains characteristics information from the processing modules 51 to 53. The control unit 11 gives the acquired characteristics information and a random number vector to the estimation module 55 and executes an arithmetic operation process of the estimation module 55. In accordance with this arithmetic operation process, the control unit 11 obtains each sample of the result of estimation of a candidate state of a next time step from the roadmap constructing model 5.

By inputting each of samples of the estimation result and the correct answer data to the discriminator 59 and executing an arithmetic operation process of the discriminator 59, the control unit 11 can obtain a result of discrimination of the origin of each input sample from the discriminator 59. The control unit 11 adjusts values of arithmetic operation parameters of the discriminator 59 such that an error between this discrimination result and the true value (true/false) of the discrimination is small. A method for adjusting the values of the arithmetic operation parameters may be selected appropriately in accordance with a type of the machine learning model. As one example, in a case in which a neural network is employed in the configuration of the discriminator 59, the values of the arithmetic operation parameters of the discriminator 59 may be adjusted using an error backward propagation method. As the method for adjusting the arithmetic operation parameters of the discriminator 59, a known optimization method may be employed. In accordance with this, the discriminator 59 can be trained such that it obtains the capability of discriminating the origin of an input sample.

In addition, the control unit 11 inputs each sample of training data to the roadmap constructing model 5 and executes an arithmetic operation process of the roadmap constructing model 5. In accordance with this arithmetic operation process, the control unit 11 obtains each sample of a result of estimation of a candidate state in a next time step from the roadmap constructing model 5. By inputting each sample of the estimation result to the discriminator 59 and executing the arithmetic operation process of the discriminator 59, the control unit 11 can obtain a result of discrimination of the origin of each input sample from the discriminator 59. The control unit 11 calculates an error such that this discrimination result is mistaken (in other words, as the origin of an input sample is mistakenly determined as correct answer data, the error becomes smaller) and adjusts the values of the arithmetic operation parameters of the roadmap constructing model 5 such that the calculated error becomes smaller. The method for adjusting the values of the arithmetic operation parameters of the roadmap constructing model 5 may be similar to that of the embodiment described above. In accordance with this, the roadmap constructing model 5 can be trained such that it obtains the capability of generating an estimation result that degrades the discrimination performance (that is, correct answer data is mistakenly determined) of the discriminator 59.

In one example illustrated in Fig. 15, in a training step of the discriminator 59, the control unit 11 adjusts the values of the arithmetic operation parameters of the discriminator 59 while fixing the values of the arithmetic operation parameters of the roadmap constructing model 5. On the other hand, in the training step of the roadmap constructing model 5, the control unit 11 adjusts the values of the arithmetic operation parameters of the roadmap constructing model 5 while fixing the values of the arithmetic operation parameters of the discriminator 59. The control unit 11 alternately repeatedly executes training processes of the discriminator 59 and the roadmap constructing model 5. In accordance with this, in correspondence with improvement of discrimination performance of the discriminator 59, the roadmap constructing model 5 obtains the capability of generating an estimation result causing discrimination using this discriminator 59 to fail, in other words, approximating correct answer data (the state 323A of the second time step of each data set 32A). Thus, also according to the machine learning method of this modified example, similar to the embodiment described above, the trained roadmap constructing model 5 that has obtained the capability of estimating an appropriate candidate state of a target agent in a next time step from candidate states of the target agent and other agents in the target time step can be generated.

In addition, the method for adversarial learning may not be limited to such an example. In another example, a gradient inversion layer may be disposed between the roadmap constructing model 5 and the discriminator 59. The gradient inversion layer is configured to pass a value as it is at the time of calculation of forward propagation and invert a value at the time of backward propagation. In accordance with this gradient inversion layer, the control unit 11 may execute a training process of the discriminator 59 in the adversarial learning described above and a training process of the roadmap constructing model 5 at one time.

<4.3>
In the embodiment described above, the cost-to-go characteristic may be omitted from the target agent information 41 and the other agent information 43. In accordance with this, the process of obtaining the cost-to-go characteristic may be omitted. The information processing relating to the cost-to-go characteristic may be omitted from the information processing of the roadmap constructing model 5. The training cost-to-go characteristic may be omitted from the learning data 3. The training process relating to the cost-to-go characteristic may be omitted from the process of machine learning of the roadmap constructing model 5.

In the embodiment described above, information relating to the direction flag may be omitted from the target agent information 41. In accordance with this, the process of obtaining the transition flag may be omitted. The information processing relating to the direction flag may be omitted from the information processing of the roadmap constructing model 5. The training flag 325 may be omitted from the learning data 3. The training process relating to the training flag 325 may be omitted from the process of machine learning of the roadmap constructing model 5.

In the embodiment described above, the attribute information of the target agent may be omitted from the target agent information 41. In accordance with this, the process of obtaining the attribute information of a target agent may be omitted. The information processing relating to the attribute information of a target agent may be omitted from the information processing of the roadmap constructing model 5. Relating to a target agent for learning, the training attribute information 33 may be omitted from the learning data 3. The training process relating to the training attribute information 33 of a target agent for learning may be omitted from the processing of the machine learning of the roadmap constructing model 5.

In the embodiment described above, attribute information of other agents may be omitted from the other agent information 43. In accordance with this, the process of obtaining the attribute information of the other agents may be omitted. The information processing relating to the attribute information of the other agents may be omitted from the information processing of the roadmap constructing model 5. Regarding the other agents for learning, the training attribute information 33 may be omitted from the learning data 3. The training process relating to the training attribute information 33 of the other agents for learning may be omitted from the process of the machine learning of the roadmap constructing model 5.

In the embodiment described above, the information relating to candidate states of past time steps may be omitted from the target agent information 41 and the other agent information 43. In accordance with this, the process of obtaining the information of candidate states of past time steps may be omitted. The information processing relating to candidate states of past time steps may be omitted from the information processing of the roadmap constructing model 5. The information of candidate state of past time steps may be omitted from the training data. The training process relating to candidate states of past time steps may be omitted from the process of machine learning of the roadmap constructing model 5.

In the embodiment described above, the third processing module 53 may be omitted from the roadmap constructing model 5. In accordance with this, the process of obtaining the environmental information 45 may be omitted. The information processing relating to the third processing module 53 may be omitted from the information processing of the roadmap constructing model 5. The training environmental information 35 may be omitted from the learning data 3. A training process relating to the training environmental information 35 may be omitted from the process of the machine learning of the roadmap constructing model 5.

In the embodiment described above, input/output forms of the roadmap constructing model 5 may be appropriately changed. The roadmap constructing model 5 may be configured to further accept input of information other than the target agent information 41, the other agent information 43, and the environmental information 45. The roadmap constructing model 5 may be configured to further output information other than estimation results of candidate states of a target agent in a next time step.

§5 Examples

In order to verify validity of the present invention, techniques relating to an example and a comparative example described below have been configured. However, the present invention is not limited to the example described below.

(Problem Setting)

- Problem: Search for a shortest movement route from start positions to goal positions of 21 to 30 agents.
- Environment: two-dimensional plane ($[0,1]^2$)
- Continuous state space: continuous space representing positions (state = position)
- Agent

    - Shape: circular shape
    - Size (radius): size of environment $\times$ 1/32 $\times$ magnification; magnification is randomly determined from {1, 1.25, 1.5}
    - Maximum speed: size of environment $\times$ 1/64 x magnification; magnification is randomly determined from {1, 1.25, 1.5}
    - Number: randomly determined between 21 to 30
    - Start position/goal position: randomly determined

- Obstacle

    - Shape: circular shape
    - Size (radius): environment size $\times$ magnification; magnification is randomly determined between 0.05 to 0.08
    - Position: randomly determined

First, in accordance with the problem setting described above, instances of 1,100 types of route planning problems were generated. Among 1,000 types of instances among them were used as learning data of a roadmap constructing model according to the example. By constructing a roadmap using random sampling and performing prioritized planning using the acquired roadmap (Reference Literature: David Silver, "Cooperative Pathfinding", Proceedings of the Artificial Intelligence for Interactive Digital Entertainment Conference (AIIDE) (2005), 117 122.), correct answer routes of each agent in 1,000 types of instances were acquired (in other words, using a technique as in a comparative example to be described below, a correct answer route of each agent in each instance was acquired). On the other hand, the remaining 100 types of instances were used as evaluation data for each of the example and the comparative example.

<Example>

In the example, a roadmap constructing model having a configuration similar to that of the embodiment (Fig. 2A) was generated. Conditions of the roadmap constructing model and input information (target agent information, other agent information, and environmental information) are represented below. By acquiring learning data from the 1000 types of instances and performing machine learning using the method illustrated in Fig. 7, a trained roadmap constructing model was generated. Adam (learning rate = 0.001) was employed in an optimization algorithm of machine learning, and a batch size was set to 50, and an epoch number was set to 1000. A trained model for which a loss for evaluation data becomes a minimum was used for an evaluation.

(Conditions of Roadmap Constructing Model)

- Encoder (a first processing module to a third processing module)

    - Configuration: Fully-coupled layer -> Batch normalization -> ReLU -> Fully-coupled layer -> Batch normalization -> ReLU
    - Dimension of output (characteristics information): 64 dimensions

- Estimation module

    - Configuration: Fully-coupled layer -> Batch normalization -> ReLU -> Fully-coupled layer -> Batch normalization -> ReLU
    - Dimension of output (estimation result): 3 dimensions, a distance (one dimension) and a direction (represented using a unit vector; 2 dimensions) from a candidate position of a target time step to a candidate position of a next time step

(Conditions of Input Information)

- Candidate state and goal state in target time step: A distance and a direction from a candidate position to a goal position in a target time step are represented using a 2-dimensional unit vector.
- Candidate state in past time step: A distance and a direction from a candidate position of a time step that is one time step before to a candidate position of a target time step are represented using a 2-dimensional unit vector.
- Information relating to obstacle: In an environment represented using 160×160 grids, a binary characteristic vector representing presence/absence of obstacles in 19×19 masses on the periphery of a candidate position of a target time step using 0/1.
- Cost-to-go characteristic: A binary characteristic vector representing whether or not each position of 19×19 masses on the periphery of a candidate position of a target time step becomes closer to a goal state using 0/1.

- Direction flag: A direction of a candidate position in a next time step being one of "left side (a left side of more than 30 degrees when seen from a goal direction)", "a front side (a range of left/right 30 degrees of the goal direction)", and "a right side (a right side of more than 30 degrees when seen from the goal direction)" is represented using 3 dimensional vectors of [1, 0, 0], [0, 1, 0], and [0, 0, 1].

    - Attribute information is omitted
    - Other agents: 5 agents from an agent positioned nearest a target agent to an agent positioned near the 5th in a target time step
    - Processing method of second processing module: Information of each agent was integrated by employing the method illustrated in Fig. 2B

Next, for each of the 100 types of instances (evaluation data) described above, a roadmap for each agent was constructed using the generated trained roadmap constructing model. At the time of constructing a roadmap, in a time step t, with a probability of the following Equation 2, without using the trained roadmap constructing model, a node (a candidate position of a next time step) was disposed at a position randomly moved from a candidate position of a target time step. [Math. 2]

$$1 - \exp(-\gamma t/\min(T_{max}, T_{makespan})) \text{ where } \gamma = 15 \ldots (2)$$

$T_{max}$ represents a maximum time step number (set to 64), and $T_{makespan}$ represents a maximum value of a route length acquired in the procedure of constructing a roadmap up to this estimation process.

Then, for each instance, on a roadmap acquired for each agent, a shortest route of each agent was searched for. The prioritized planning was employed in the route searching method.

<Comparative Example>

On the other hand, in a comparative example, for each of the 100 types of instances (evaluation data) described above, by randomly dispose 5,000 nodes for each agent, a roadmap of each agent was constructed. Then, for each instance, on the acquired roadmap, a shortest route of each agent was searched for. The prioritized planning similar to that of the example was employed in the route searching method.

<Result>

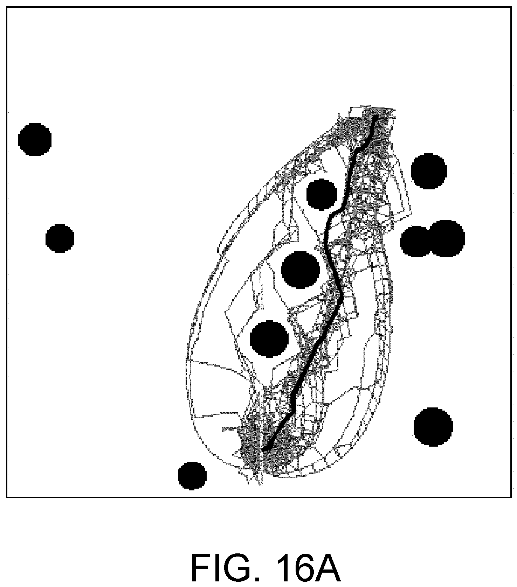

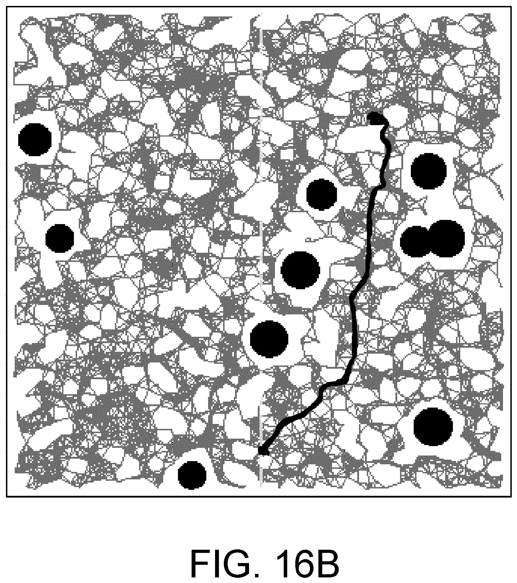

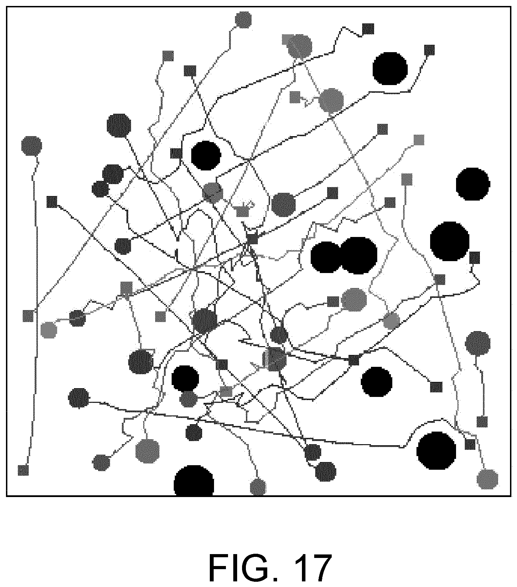

Fig. 16A illustrates a roadmap constructed for a certain agent and a result of a route search using a technique according to the example. Fig. 16B illustrates a roadmap constructed for a certain agent and a result of a route search using a technique according to the comparative example. Fig. 17 illustrates a route planning result of each agent acquired using a technique according to the example for a certain instance (evaluation data). The following Table 1 represents performance results of the techniques according to the example and the comparative example for 100 types of instances (evaluation data).

[Table 1]

|  | EXAMPLE | COMPARATIVE EXAMPLE |
|---|---|---|
| SUCCESS RATE OF ROUTE PLANNING | 88/100 | 85/100 |
| AVERAGE ROUTE LENGTH (TOTAL ROUTE LENGTH/EDGE END NUMBER) | 20.50 | 18.93 |
| PROCESSING TIME (SECONDS) (ROADMAP CONSTRUCTING PART) | 93.25 | 304.93 |
| PROCESSING TIME (SECONDS) (ROUTE SEARCHING PART) | 6.94 | 71.80 |

In the route planning according to the example and the comparative example, a PC (having no use of a GPU), which is available in the market, including a CPU (intel Core i7-7800) and a RAM (32 GB) was used. A processing time of each part for evaluation data was acquired by measuring a required time until an end after a start of each part of processing using this PC.

As illustrated in Fig. 17 as one example, route planning of each agent was appropriately performed using a route planning method according to the example. Regarding this acquired route planning, as illustrated in Table 1, the example has performance that is almost equivalent to that of the comparative example regarding a success ratio and whether or not the acquired route is optimal. On the other hand, as illustrated in Figs. 16A and 16B as one example, in the example, compared to the comparative example, a range in which nodes of the roadmap are disposed could be narrowed down into an appropriate range. As a result, in the example, compared to the comparative example, a time required for a route search could be significantly reduced. From such results, according to the present invention, when route planning problems of multiple agents on a continuous state space are to be solved, it could be verified that the possibility of finding a more optimal route for an agent is raised, and a cost required for a search can be reduced.

[Reference Signs List]

1 Model generating device
11 Control unit
12 Storage unit
13 Communication interface
14 Input device

15 Output device
16 Drive
81 Model generating program
91 Storage medium
111 Data acquiring unit
112 Learning processing unit
113 Storage processing unit
125 Learning result data
2 Route planning system
21 Control unit
22 Storage unit
23 Communication interface
24 Input device
25 Output device
26 Drive
82 Route planning program
92 Storage medium
211 Information acquiring unit
212 Map constructing unit
213 Search unit
214 Output unit
221 Target information
225 Roadmap
3 Learning data
31 Goal state
32 Data set
321 State of first time step
323 State of second time step
325 Training flag
33 Training attribute information
35 Training environmental information
41 Target agent information
43 Other agent information
45 Environmental information
5 Roadmap constructing model
51 First processing module
52 Second processing module
53 Third processing module
55 Estimation module

**Claims**

1. A roadmap constructing device (201) comprising:

   an information acquiring unit (211) configured to obtain target information (221) including a start state and a goal state (31) of each of a plurality of agents in a continuous state space; and
   a map constructing unit (212) configured to construct a roadmap for each of the agents from the obtained target information (221) using a roadmap constructing model (5) that has completed training,
   wherein the roadmap constructing model (5) includes:

      a first processing module (51) configured to generate first characteristics information from target agent information (41) including a goal state (31) of a target agent and a candidate state of a target time step;
      a second processing module (52) configured to generate second characteristics information from other agent information including goal states (31) of other agents other than the target agent and candidate states of the target time step; and
      an estimation module (55) configured to estimate one or more candidate states of the target agent in a time step next to the target time step from the first characteristics information and the second characteristics information that are generated,

wherein the roadmap constructing model (5) that has completed training is generated using machine learning using learning data acquired from correct answer routes of a plurality of agents for learning, and

wherein the constructing of the roadmap for each agent is configured by executing a process of handling one agent among the plurality of agents as the target agent, handling at least some of remaining agents among the plurality of agents as the other agents, estimating one or more candidate states in a next time step using the roadmap constructing model (5) that has completed training by designating the start state of the one agent represented in the obtained target information (221) as a candidate state of the target agent in an initial target time step, and repeating estimating of the candidate state of a next time step using the roadmap constructing model (5) that has completed training by designating each of the one or more estimated candidate states in the next time step as a candidate state of a new target time step until the goal state (31) or a state near the goal state (31) of the one agent is included in estimated one or more candidate states in the next time step by designating each of the plurality of agents as the target agent.

2. A route planning system (2) comprising:

the roadmap constructing device (201) according to claim 1; and
a search unit (213) configured to search for a route of each of the agents from the start state to the goal state (31) on the roadmap constructed for each agent.

3. The route planning system (2) according to claim 2,

wherein the roadmap constructing model (5) further includes a third processing module (53) configured to generate third characteristics information from environmental information including information relating to obstacles,

wherein the estimation module (55) is configured to estimate one or more candidate states in the next time step from the first characteristics information, the second characteristics information, and the third characteristics information that are generated,

wherein the obtained target information (221) is configured to further include the information relating to obstacles present in the continuous state space, and

wherein the using of the roadmap constructing model (5) that has completed training includes configuring of the environmental information from the information included in the obtained target information (221) and giving of the configured environmental information to the third processing module (53).

4. The route planning system (2) according to claim 2 or 3,

wherein the target agent information (41) is configured to further include a candidate state of the target agent in a time step before the target time step, and

wherein the other agent information is configured to further include candidate states of the other agents in a time step before the target time step.

5. The route planning system (2) according to any one of claims 2 to 4, wherein the target agent information (41) is configured to further include attributes of the target agent.

6. The route planning system (2) according to claim 5, wherein the attributes of the target agent include at least one of a size, a shape, a maximum speed, and a weight.

7. The route planning system (2) according to any one of claims 2 to 6, wherein the other agent information is configured to further include attributes of the other agents.

8. The route planning system (2) according to claim 7, wherein the attributes of the other agents include at least one of a size, a shape, a maximum speed, and a weight.

9. The route planning system (2) according to any one of claims 2 to 8, wherein the target agent information (41) is configured to further include a direction flag representing a direction in which the target agent is to transition in the continuous state space.

10. The route planning system (2) according to any one of claims 2 to 9, wherein each of the plurality of agents is a mobile body configured to autonomously move.

11. A route planning method causing a computer to execute:

a step (S201) of obtaining target information (221) including a start state and a goal state (31) of each of a plurality of agents in a continuous state space;

a step (S202) of constructing a roadmap for each of the agents from the obtained target information (221) using a roadmap constructing model (5) that has completed training; and

a step (S203) of searching for a route of each of the agents from the start state to the goal state (31) on the roadmap constructed for each agent,

wherein the roadmap constructing model (5) includes:

a first processing module (51) configured to generate first characteristics information from target agent information (41) including a goal state (31) of a target agent and a candidate state of a target time step;

a second processing module (52) configured to generate second characteristics information from other agent information including goal states (31) of other agents other than the target agent and candidate states of the target time step; and

an estimation module (55) configured to estimate one or more candidate states of the target agent in a time step next to the target time step from the first characteristics information and the second characteristics information that are generated,

wherein the roadmap constructing model (5) that has completed training is generated using machine learning using learning data acquired from correct answer routes of a plurality of agents for learning, and

wherein the constructing of the roadmap for each agent is configured by executing a process of handling one agent among the plurality of agents as the target agent, handling at least some of remaining agents among the plurality of agents as the other agents, estimating one or more candidate states in a next time step using the roadmap constructing model (5) that has completed training by designating the start state of the one agent represented in the obtained target information (221) as a candidate state of the target agent in an initial target time step, and repeating estimating of the candidate state of a next time step using the roadmap constructing model (5) that has completed training by designating each of the one or more estimated candidate states in the next time step as a candidate state of a new target time step until the goal state (31) or a state near the goal state (31) of the one agent is included in estimated one or more candidate states in the next time step by designating each of the plurality of agents as the target agent.

12. A model generating device (1) comprising:

a data acquiring unit configured to obtain learning data generated from correct answer routes of a plurality of agents for learning; and

a learning processing unit configured to perform machine learning of a roadmap constructing model (5) using the obtained learning data,

wherein the roadmap constructing model (5) includes:

a first processing module (51) configured to generate first characteristics information from target agent information (41) including a goal state (31) of a target agent and a candidate state of a target time step in a continuous state space;

a second processing module (52) configured to generate second characteristics information from other agent information including goal states (31) of other agents other than the target agent and candidate states of the target time step; and

an estimation module (55) configured to estimate one or more candidate states of the target agent in a time step next to the target time step from the first characteristics information and the second characteristics information that are generated,

wherein the learning data includes a goal state (31) in the correct answer route of each agent for learning and a plurality of data sets,

wherein each of the plurality of data sets is configured using a combination of a state of each agent for learning in a first time step and a state of each agent for learning in a second time step,

wherein the second time step is a time step next to the first time step, and

wherein the machine learning of the roadmap constructing model (5) is configured by:

handling one agent for learning among the plurality of agents for learning as the target agent;

handling at least some of remaining agents for learning among the plurality of agents for learning as the other agents; and

training the roadmap constructing model (5) such that a candidate state of the target agent in a next time step, which is estimated by the estimation module (55), is appropriate for a state of the one agent for learning in the second time step by, for each data set, giving a state of the one agent for learning in the first time step to the first processing module (51) as a candidate state of the target agent in the target time step and giving states of at least some of remaining agents for learning in the first time step to the second processing module (52) as candidate states of the other agents in the target time step.

**13.** The model generating device (1) according to claim 12,

wherein the target agent information (41) is configured to further include a direction flag representing a direction in which the target agent is to transition in the continuous state space,

wherein each data set is configured to further include a training flag representing a direction from the state of the first time step to the state of the second time step in the continuous state space, and

wherein the machine learning of the roadmap constructing model (5) includes giving of the training flag of the one agent for learning to the first processing module (51) as a direction flag of the target agent when a candidate state of the target agent in a next time step is estimated for each data set.

**14.** A model generating method causing a computer to execute:

a step (S101) of obtaining learning data generated from correct answer routes of a plurality of agents for learning; and

a step (S102) of performing machine learning of a roadmap constructing model (5) using the obtained learning data,

wherein the roadmap constructing model (5) includes:

a first processing module (51) configured to generate first characteristics information from target agent information (41) including a goal state (31) of a target agent and a candidate state of a target time step in a continuous state space;

a second processing module (52) configured to generate second characteristics information from other agent information including goal states (31) of other agents other than the target agent and candidate states of the target time step; and

an estimation module (55) configured to estimate one or more candidate states of the target agent in a time step next to the target time step from the first characteristics information and the second characteristics information that are generated,

wherein the learning data includes a goal state (31) in the correct answer route of each agent for learning and a plurality of data sets,

wherein each of the plurality of data sets is configured using a combination of a state of each agent for learning in a first time step and a state of each agent for learning in a second time step,

wherein the second time step is a time step next to the first time step, and

wherein the machine learning of the roadmap constructing model (5) is configured by:

handling one agent for learning among the plurality of agents for learning as the target agent;

handling at least some of remaining agents for learning among the plurality of agents for learning as the other agents; and

training the roadmap constructing model (5) such that a candidate state of the target agent in a next time step, which is estimated by the estimation module (55), is appropriate for a state of the one agent for learning in the second time step by, for each data set, giving a state of the one agent for learning in the first time step to the first processing module (51) as a candidate state of the target agent in the target time step and giving states of at least some of remaining agents for learning in the first time step to the second processing module (52) as candidate states of the other agents in the target time step.

**Patentansprüche**

**1.** Roadmap-Erzeugungsvorrichtung (201), umfassend:

eine Informationserfassungseinheit (211), die so konfiguriert ist, dass sie Zielinformationen (221) erhält, die einen Startzustand und einen Zielzustand (31) jedes einzelnen einer Vielzahl von Agenten in einem kontinuierlichen Zustandsraum umfassen; und

eine Kartenerzeugungseinheit (212), die so konfiguriert ist, dass sie für jeden der Agenten aus den erhaltenen Zielinformationen (221) unter Verwendung eines Roadmap-Erzeugungsmodells (5), das trainiert ist, eine Roadmap erzeugt,

wobei das Roadmap-Erzeugungsmodell (5) umfasst:

ein erstes Verarbeitungsmodul (51), das so konfiguriert ist, dass es erste Merkmalsinformationen aus Zielagenteninformationen (41) generiert, die einen Zielzustand (31) eines Zielagenten und einen Kandidatenzustand eines Zielzeitschritts umfassen;

ein zweites Verarbeitungsmodul (52), das so konfiguriert ist, dass es zweite Merkmalsinformationen aus anderen Agenteninformationen generiert, die Zielzustände (31) anderer Agenten als des Zielagenten und Kandidatenzustände des Zielzeitschritts umfassen; und

ein Schätzmodul (55), das so konfiguriert ist, dass es einen oder mehrere Kandidatenzustände des Zielagenten in einem dem Zielzeitschritt benachbarten Zeitschritt aus den erzeugten ersten Merkmalsinformationen und den zweiten Merkmalsinformationen schätzt,

wobei das Roadmap-Erzeugungsmodell (5), das trainiert ist, unter Verwendung von maschinellem Lernen anhand von Lerndaten erzeugt wird, die aus den richtigen Antwortwegen einer Vielzahl von Agenten zum Lernen gewonnen wurden, und

wobei die Erzeugung der Roadmap für jeden Agenten so konfiguriert ist, dass ein Prozess ausgeführt wird, bei dem ein Agent aus der Vielzahl von Agenten als der Zielagent behandelt wird, Behandeln mindestens einige der verbleibenden Agenten aus der Vielzahl von Agenten als die anderen Agenten, Schätzen eines oder mehrerer Kandidatenzustände in einem nächsten Zeitschritt unter Verwendung des Roadmap-Erzeugungsmodells (5), das trainiert ist, indem der Startzustand des einen Agenten, der in den erhaltenen Zielinformationen (221) repräsentiert ist, als ein Kandidatenzustand des Zielagenten in einem anfänglichen Zielzeitschritt festgelegt wird, und wiederholtes Schätzen eines Kandidatenzustands eines nächsten Zeitschritts unter Verwendung des Roadmap-Erzeugungsmodells (5), das trainiert ist, indem jeder der einen oder mehreren geschätzten Kandidatenzustände in dem nächsten Zeitschritt als ein Kandidatenzustand eines neuen Zielzeitschritts festgelegt wird, bis der Zielzustand (31) oder ein Zustand in der Nähe des Zielzustands (31) des einen Agenten in den geschätzten einen oder mehreren Kandidatenzuständen in dem nächsten Zeitschritt umfasst ist, indem jeder der Vielzahl von Agenten als der Zielagent festgelegt wird.

2. Routenplanungssystem (2), umfassend:

die Roadmap-Erzeugungsvorrichtung (201) nach Anspruch 1; und
eine Sucheinheit (213), die so konfiguriert ist, dass sie auf der für jeden Agenten erzeugten Roadmap nach einer Route für jeden der Agenten von dem Startzustand zu dem Zielzustand (31) sucht.

3. Routenplanungssystem (2) nach Anspruch 2,

wobei das Roadmap-Erzeugungsmodell (5) ferner ein drittes Verarbeitungsmodul (53) umfasst, das so konfiguriert ist, dass es dritte Merkmalsinformationen aus Umgebungsinformationen generiert, umfassend Informationen bezüglich Hindernissen,

wobei das Schätzmodul (55) so konfiguriert ist, dass es einen oder mehrere Kandidatenzustände in dem nächsten Zeitschritt aus den generierten ersten Merkmalsinformationen, den zweiten Merkmalsinformationen und den dritten Merkmalsinformationen schätzt,

wobei die erhaltenen Zielinformationen (221) ferner Informationen bezüglich Hindernissen umfassen, die in dem kontinuierlichen Zustandsraum vorhanden sind, und

wobei die Verwendung des Roadmap-Erzeugungsmodells (5), das trainiert ist, das Erzeugen der Umgebungsinformationen aus den in den erhaltenen Zielinformationen (221) umfassten Informationen und das Bereitstellen der Umgebungsinformationen an das dritte Verarbeitungsmodul (53) umfasst.

4. Routenplanungssystem (2) nach Anspruch 2 oder 3,

wobei die Zielagenteninformationen (41) so konfiguriert sind, dass sie ferner einen Kandidatenzustand des Zielagenten in einem Zeitschritt vor dem Zielzeitschritt umfassen, und
wobei die Informationen über die anderen Agenten so konfiguriert sind, dass sie ferner Kandidatenzustände der anderen Agenten in einem Zeitschritt vor dem Zielzeitschritt umfassen.

5. Routenplanungssystem (2) nach einem der Ansprüche 2 bis 4, wobei die Zielagenteninformationen (41) so konfiguriert sind, dass sie ferner Attribute des Zielagenten umfassen.

6. Routenplanungssystem (2) nach Anspruch 5, wobei die Attribute des Zielagenten mindestens eines aus einer Größe, einer Form, einer Höchstgeschwindigkeit und einem Gewicht umfassen.

7. Routenplanungssystem (2) nach einem der Ansprüche 2 bis 6, wobei die Informationen über die anderen Agenten so konfiguriert sind, dass sie ferner Attribute der anderen Agenten umfassen.

8. Routenplanungssystem (2) nach Anspruch 7, wobei die Attribute der anderen Agenten mindestens eines aus einer Größe, einer Form, einer Höchstgeschwindigkeit und einem Gewicht umfassen.

9. Routenplanungssystem (2) nach einem der Ansprüche 2 bis 8, wobei die Zielagenteninformationen (41) so konfiguriert sind, dass sie ferner ein Richtungsflag umfassen, das eine Richtung darstellt, in die der Zielagent in dem kontinuierlichen Zustandsraum übergehen soll.

10. Routenplanungssystem (2) nach einem der Ansprüche 2 bis 9, wobei jeder der Vielzahl von Agenten ein mobiler Körper ist, der so konfiguriert ist, dass er sich autonom bewegt.

11. Routenplanungsverfahren, das einen Computer veranlasst, auszuführen:

    einen Schritt (S201) des Erhaltens von Zielinformationen (221), umfassend einen Startzustand und einen Zielzustand (31) von jedem einer Vielzahl von Agenten in einem kontinuierlichen Zustandsraum;
    einen Schritt (S202) des Erzeugens einer Roadmap für jeden der Agenten aus den erhaltenen Zielinformationen (221) unter Verwendung eines Roadmap-Erzeugungsmodells (5), das trainiert ist; und
    einen Schritt (S203) des Suchens nach einer Route für jeden der Agenten von dem Startzustand zu dem Zielzustand (31) auf der für jeden Agenten erzeugten Roadmap,
    wobei das Roadmap-Erzeugungsmodell (5) umfasst:

        ein erstes Verarbeitungsmodul (51), das so konfiguriert ist, dass es erste Merkmalsinformationen aus Zielagenteninformationen (41) generiert, die einen Zielzustand (31) eines Zielagenten und einen Kandidatenzustand eines Zielzeitschritts umfassen;
        ein zweites Verarbeitungsmodul (52), das so konfiguriert ist, dass es zweite Merkmalsinformationen aus anderen Agenteninformationen generiert, die Zielzustände (31) anderer Agenten als des Zielagenten und Kandidatenzustände des Zielzeitschritts umfassen; und
        ein Schätzmodul (55), das so konfiguriert ist, dass es einen oder mehrere Kandidatenzustände des Zielagenten in einem dem Zielzeitschritt benachbarten Zeitschritt aus den erzeugten ersten Merkmalsinformationen und den zweiten Merkmalsinformationen schätzt,
        wobei das Roadmap-Erzeugungsmodell (5), das trainiert ist, unter Verwendung von maschinellem Lernen anhand von Lerndaten erzeugt wird, die aus den richtigen Antwortrouten einer Vielzahl von Agenten zum Lernen gewonnen wurden, und
        wobei die Erzeugung der Roadmap für jeden Agenten so konfiguriert ist, dass ein Prozess ausgeführt wird, bei dem ein Agent aus der Vielzahl von Agenten als der Zielagent behandelt wird, Behandeln mindestens einige der verbleibenden Agenten aus der Vielzahl von Agenten als die anderen Agenten, Schätzen eines oder mehrerer Kandidatenzustände in einem nächsten Zeitschritt unter Verwendung des Roadmap-Erzeugungsmodells (5), das trainiert ist, indem der Startzustand des einen Agenten, der in den erhaltenen Zielinformationen (221) repräsentiert ist, als ein Kandidatenzustand des Zielagenten in einem anfänglichen Zielzeitschritt festgelegt wird, und wiederholtes Schätzen eines Kandidatenzustands eines nächsten Zeitschritts unter Verwendung des Roadmap-Erzeugungsmodells (5), das trainiert ist, indem jeder der einen oder mehreren geschätzten Kandidatenzustände in dem nächsten Zeitschritt als ein Kandidatenzustand eines neuen Zielzeitschritts festgelegt wird, bis der Zielzustand (31) oder ein Zustand in der Nähe des Zielzustands (31) des einen Agenten in den geschätzten einen oder mehreren Kandidatenzuständen in dem nächsten Zeitschritt umfasst ist, indem jeder der Vielzahl von Agenten als der Zielagent festgelegt wird.

12. Modellgenerierungsvorrichtung (1), umfassend:

eine Datenerfassungseinheit, die so konfiguriert ist, dass sie Lerndaten erhält, die aus den richtigen Antwortrouten einer Vielzahl von Agenten zum Lernen abgeleitet wurden; und

eine Lernverarbeitungseinheit, die so konfiguriert ist, dass sie maschinelles Lernen eines Roadmap-Erzeugungsmodells (5) unter Verwendung der erfassten Lerndaten durchführt,

wobei das Roadmap-Erzeugungsmodell (5) umfasst:

ein erstes Verarbeitungsmodul (51), das so konfiguriert ist, dass es erste Merkmalsinformationen aus Zielagenteninformationen (41) generiert, umfassend einen Zielzustand (31) eines Zielagenten und einen Kandidatenzustand eines Zielzeitschritts in einem kontinuierlichen Zustandsraum;

ein zweites Verarbeitungsmodul (52), das so konfiguriert ist, dass es zweite Merkmalsinformationen aus anderen Agenteninformationen generiert, die Zielzustände (31) anderer Agenten als des Zielagenten und Kandidatenzustände des Zielzeitschritts umfassen; und

ein Schätzmodul (55), das so konfiguriert ist, dass es einen oder mehrere Kandidatenzustände des Zielagenten in einem dem Zielzeitschritt benachbarten Zeitschritt aus den erzeugten ersten Merkmalsinformationen und den zweiten Merkmalsinformationen schätzt,

wobei die Lerndaten einen Zielzustand (31) in den richtigen Antwortrouten der Agenten zum Lernen und eine Vielzahl von Datensätzen umfassen,

wobei jeder der Vielzahl von Datensätzen unter Verwendung einer Kombination aus einem Zustand jedes Agenten zum Lernen in einem ersten Zeitschritt und einem Zustand jedes Agenten zum Lernen in einem zweiten Zeitschritt konfiguriert ist,

wobei der zweite Zeitschritt ein dem ersten Zeitschritt benachbarter Zeitschritt ist, und

wobei das maschinelle Lernen des Roadmap-Erzeugungsmodells (5) konfiguriert ist durch:

Behandlung eines Agenten zum Lernen aus der Vielzahl von Agenten zum Lernen als der Zielagent;

Behandlung zumindest einiger der verbleibenden Agenten zum Lernen aus der Vielzahl von Agenten zum Lernen als die anderen Agenten; und

Trainieren des Roadmap-Erzeugungsmodells (5) derart, dass ein von dem Schätzmodul (55) geschätzter Kandidatenzustand des Zielagenten in einem nächsten Zeitschritt für einen Zustand des einen Agenten zum Lernen in dem zweiten Zeitschritt geeignet ist, indem für jeden Datensatz ein Zustand des einen Agenten zum Lernen in dem ersten Zeitschritt dem ersten Verarbeitungsmodul (51) als ein Kandidatenzustand des Zielagenten in dem Zielzeitschritt zugeführt wird und Zustände von zumindest einigen der verbleibenden Agenten zum Lernen in dem ersten Zeitschritt dem zweiten Verarbeitungsmodul (52) als Kandidatenzustände der anderen Agenten in dem Zielzeitschritt zugeführt werden.

**13.** Modellgenerierungsvorrichtung (1) nach Anspruch 12,

wobei die Zielagenteninformationen (41) so konfiguriert sind, dass sie ferner ein Richtungsflag umfassen, das eine Richtung darstellt, in die der Zielagent in dem kontinuierlichen Zustandsraum übergehen soll,

wobei jeder Datensatz so konfiguriert ist, dass er ferner ein Trainingsflag umfasst, das eine Richtung von dem Zustand des ersten Zeitschritts zu dem Zustand des zweiten Zeitschritts in dem kontinuierlichen Zustandsraum darstellt, und

wobei das maschinelle Lernen des Roadmap-Erzeugungsmodells (5) das Bereitstellen des Trainingsflags des einen Agenten zum Lernen an das erste Verarbeitungsmodul (51) als ein Richtungsflag des Zielagenten umfasst, wenn für jeden Datensatz ein Kandidatenzustand des Zielagenten in einem nächsten Zeitschritt geschätzt wird.

**14.** Modellgenerierungsverfahren, das einen Computer veranlasst, auszuführen:

einen Schritt (S101) des Erhaltens von Lerndaten, die aus den richtigen Antwortrouten einer Vielzahl von Agenten zum Lernen abgeleitet wurden; und

einen Schritt (S102) des Durchführens des maschinellen Lernens eines Roadmap-Erzeugungsmodells (5) unter Verwendung der erhaltenen Lerndaten,

wobei das Roadmap-Erzeugungsmodell (5) umfasst:

ein erstes Verarbeitungsmodul (51), das so konfiguriert ist, dass es erste Merkmalsinformationen aus Zielagenteninformationen (41) generiert, die einen Zielzustand (31) eines Zielagenten und einen Kandidatenzustand eines Zielzeitschritts in einem kontinuierlichen Zustandsraum umfassen;

ein zweites Verarbeitungsmodul (52), das so konfiguriert ist, dass es zweite Merkmalsinformationen aus

anderen Agenteninformationen generiert, die Zielzustände (31) anderer Agenten als des Zielagenten und Kandidatenzustände des Zielzeitschritts umfassen; und

ein Schätzmodul (55), das so konfiguriert ist, dass es einen oder mehrere Kandidatenzustände des Zielagenten in einem dem Zielzeitschritt benachbarten Zeitschritt aus den erzeugten ersten Merkmalsinformationen und den zweiten Merkmalsinformationen schätzt,

wobei die Lerndaten einen Zielzustand (31) auf der richtigen Antwortroute jedes Agenten zum Lernen und eine Vielzahl von Datensätzen umfassen,

wobei jeder der Vielzahl von Datensätzen unter Verwendung einer Kombination aus einem Zustand jedes Agenten zum Lernen in einem ersten Zeitschritt und einem Zustand jedes Agenten zum Lernen in einem zweiten Zeitschritt konfiguriert ist,

wobei der zweite Zeitschritt ein dem ersten Zeitschritt benachbarter Zeitschritt ist, und

wobei das maschinelle Lernen des Roadmap-Erzeugungsmodells (5) konfiguriert ist durch:

Behandlung eines Agenten zum Lernen aus der Vielzahl von Agenten zum Lernen als der Zielagent;

Behandlung zumindest einiger der verbleibenden Agenten zum Lernen aus der Vielzahl von Agenten zum Lernen als die anderen Agenten; und

Trainieren des Roadmap-Erzeugungsmodells (5) derart, dass ein von dem Schätzmodul (55) geschätzter Kandidatenzustand des Zielagenten in einem nächsten Zeitschritt für einen Zustand des einen Agenten zum Lernen in dem zweiten Zeitschritt geeignet ist, indem für jeden Datensatz ein Zustand des einen Agenten zum Lernen in dem ersten Zeitschritt dem ersten Verarbeitungsmodul (51) als ein Kandidatenzustand des Zielagenten in dem Zielzeitschritt zugeführt wird und Zustände von zumindest einigen der verbleibenden Agenten zum Lernen in dem ersten Zeitschritt dem zweiten Verarbeitungsmodul (52) als Kandidatenzustände der anderen Agenten in dem Zielzeitschritt zugeführt werden.

**Revendications**

1. Dispositif de construction de carte de route (201) comprenant :

une unité d'acquisition d'informations (211) configurée pour obtenir des informations cibles (221) comprenant un état de départ et un état cible (31) pour chacun d'une pluralité d'agents dans un espace d'états continu ; et

une unité de construction de carte (212) configurée pour construire une carte de route pour chacun des agents à partir des informations cibles obtenues (221) en utilisant un modèle de construction de carte de route (5) ayant terminé son apprentissage,

dans lequel le modèle de construction de carte de route (5) comprend :

un premier module de traitement (51) configuré pour générer des premières informations de caractéristiques à partir d'informations d'agent cible (41) comprenant un état cible (31) d'un agent cible et un état candidat d'un pas de temps cible ;

un deuxième module de traitement (52) configuré pour générer des deuxièmes informations de caractéristiques à partir d'autres informations d'agent comprenant des états cibles (31) d'autres agents que l'agent cible et des états candidats du pas de temps cible ; et

un module d'estimation (55) configuré pour estimer un ou plusieurs états candidats de l'agent cible dans un pas de temps adjacent au pas de temps cible à partir des premières informations de caractéristiques et des deuxièmes informations de caractéristiques qui sont générées,

dans lequel le modèle de construction de carte de route (5) ayant terminé son apprentissage est généré à l'aide de l'apprentissage automatique en utilisant des données d'apprentissage acquises à partir des itinéraires de réponse correcte d'une pluralité d'agents à des fins d'apprentissage, et

dans lequel la construction de la carte de route pour chaque agent est configurée en exécutant un processus consistant à traiter un agent parmi la pluralité d'agents comme agent cible, à traiter au moins certains des agents restants parmi la pluralité d'agents comme autres agents, à estimer un ou plusieurs états candidats dans un pas de temps suivant à l'aide du modèle de construction de carte de route (5) ayant terminé son apprentissage en désignant l'état de départ de l'agent représenté dans les informations cibles obtenues (221) comme état candidat de l'agent cible lors d'un pas de temps cible initial, et en répétant l'estimation de l'état candidat d'un pas de temps suivant à l'aide du modèle de construction de carte de route (5) ayant terminé son apprentissage, en désignant chacun des un ou plusieurs états candidats estimés lors du premier pas de temps suivante comme état candidat d'un nouveau pas de temps cible, jusqu'à ce que l'état cible (31) ou un état proche de l'état cible (31) dudit agent soit inclus dans un ou plusieurs états candidats estimés dans le pas de temps suivant en désignant chacun de la pluralité d'agents comme agent cible.

2. Système de planification d'itinéraire (2) comprenant :

le dispositif de construction de carte de route (201) selon la revendication 1 ; et
une unité de recherche (213) configurée pour rechercher un itinéraire de chacun des agents depuis l'état de départ jusqu'à l'état cible (31) sur la carte de route construite pour chaque agent.

3. Système de planification d'itinéraire (2) selon la revendication 2,
dans lequel le modèle de construction de carte routière (5) comprend en outre un troisième module de traitement (53) configuré pour générer des troisièmes informations de caractéristiques à partir d'informations environnementales comprenant des informations relatives à des obstacles,

dans lequel le module d'estimation (55) est configuré pour estimer un ou plusieurs états candidats au pas de temps suivant à partir des premières informations de caractéristiques, des deuxièmes informations de caractéristiques et des troisièmes informations de caractéristiques qui sont générées,
dans lequel les informations cibles obtenues (221) sont configurées pour inclure en outre les informations relatives aux obstacles présents dans l'espace d'états continu, et
dans lequel l'utilisation du modèle de construction de carte de route (5) ayant terminé son apprentissage comprend la configuration des informations environnementales à partir des informations incluses dans les informations cibles obtenues (221) et la transmission des informations environnementales configurées au troisième module de traitement (53).

4. Système de planification d'itinéraire (2) selon la revendication 2 ou 3,

dans lequel les informations d'agent cible (41) sont configurées pour inclure en outre un état candidat de l'agent cible à un pas de temps précédant le pas de temps cible, et
dans lequel les informations des autres agents sont configurées pour inclure en outre des états candidats des autres agents à un pas de temps précédant le pas de temps cible.

5. Système de planification d'itinéraire (2) selon l'une quelconque des revendications 2 à 4, dans lequel les informations d'agent cible (41) sont configurées pour inclure en outre des attributs de l'agent cible.

6. Système de planification d'itinéraire (2) selon la revendication 5, dans lequel les attributs de l'agent cible comprennent au moins l'un parmi une taille, une forme, une vitesse maximale et un poids.

7. Système de planification d'itinéraire (2) selon l'une quelconque des revendications 2 à 6, dans lequel les informations sur les autres agents sont configurées pour inclure en outre des attributs des autres agents.

8. Système de planification d'itinéraire (2) selon la revendication 7, dans lequel les attributs des autres agents comprennent au moins l'un parmi une taille, une forme, une vitesse maximale et un poids.

9. Système de planification d'itinéraire (2) selon l'une quelconque des revendications 2 à 8, dans lequel les informations d'agent cible (41) sont configurées pour inclure en outre un indicateur de direction représentant une direction dans laquelle l'agent cible doit effectuer une transition dans l'espace d'états continu.

10. Système de planification d'itinéraire (2) selon l'une quelconque des revendications 2 à 9, dans lequel chacun de la pluralité d'agents est un corps mobile configuré pour se déplacer de manière autonome.

11. Procédé de planification d'itinéraire qu'il consiste à faire exécuter par un ordinateur :

une étape (S201) consistant à obtenir des informations cible (221) comprenant un état de départ et un état cible (31) de chacun d'une pluralité d'agents dans un espace d'états continu ;
une étape (S202) consistant à construire une carte de route pour chacun des agents à partir des informations cible obtenues (221) en utilisant un modèle de construction de carte de route (5) ayant terminé son apprentissage ; et
une étape (S203) consistant à rechercher un itinéraire pour chacun des agents, de l'état de départ à l'état cible

EP 4 417 941 B1

(31), sur la carte de route construite pour chaque agent,
dans laquelle le modèle de construction de carte de route (5) comprend :

un premier module de traitement (51) configuré pour générer des premières informations de caractéristiques à partir d'informations d'agent cible (41) comprenant un état cible (31) d'un agent cible et un état candidat d'un pas de temps cible ;
un deuxième module de traitement (52) configuré pour générer des deuxièmes informations de caractéristiques à partir d'informations sur d'autres agents comprenant des états cibles (31) d'autres agents que l'agent cible et des états candidats du pas de temps cible ; et
un module d'estimation (55) configuré pour estimer un ou plusieurs états candidats de l'agent cible dans un pas de temps adjacent au pas de temps cible à partir des premières informations de caractéristiques et des deuxièmes informations de caractéristiques qui sont générées,
dans lequel le modèle de construction de carte de route (5) ayant terminé son apprentissage est généré à l'aide de l'apprentissage automatique en utilisant des données d'apprentissage acquises à partir des itinéraires de réponse correcte d'une pluralité d'agents à des fins d'apprentissage, et
dans lequel la construction de la carte de route pour chaque agent est configurée en exécutant un processus consistant à traiter un agent parmi la pluralité d'agents comme agent cible, à traiter au moins certains des agents restants parmi la pluralité d'agents comme autres agents, à estimer un ou plusieurs états candidats dans un pas de temps suivant à l'aide du modèle de construction de carte de route (5) ayant terminé son apprentissage en désignant l'état de départ de l'agent représenté dans les informations cibles obtenues (221) comme état candidat de l'agent cible lors d'un pas de temps cible initial, et en répétant l'estimation de l'état candidat d'un pas de temps suivant à l'aide du modèle de construction de carte de route (5) ayant terminé son apprentissage, en désignant chacun des un ou plusieurs états candidats estimés lors du pas de temps suivant comme état candidat d'un nouveau pas de temps cible jusqu'à ce que l'état cible (31) ou un état proche de l'état cible (31) dudit agent soit inclus dans un ou plusieurs états candidats estimés dans le pas de temps suivant en désignant chacun de la pluralité d'agents comme agent cible.

12. Dispositif de génération de modèle (1) comprenant :

une unité d'acquisition de données configurée pour obtenir des données d'apprentissage générées à partir des itinéraires de réponse correcte d'une pluralité d'agents à des fins d'apprentissage ; et
une unité de traitement d'apprentissage configurée pour effectuer l'apprentissage automatique d'un modèle de construction de carte de route (5) à l'aide des données d'apprentissage obtenues,
dans lequel le modèle de construction de carte de route (5) comprend :

un premier module de traitement (51) configuré pour générer des premières informations de caractéristiques à partir d'informations d'agent cible (41) comprenant un état cible (31) d'un agent cible et un état candidat d'un pas de temps cible dans un espace d'états continu ;
un deuxième module de traitement (52) configuré pour générer des deuxièmes informations de caractéristiques à partir d'informations d'autres agents comprenant des états cibles (31) d'autres agents que l'agent cible et des états candidats du pas de temps cible ; et
un module d'estimation (55) configuré pour estimer un ou plusieurs états candidats de l'agent cible dans un pas de temps adjacent au pas de temps cible à partir des premières informations de caractéristiques et des deuxièmes informations de caractéristiques générées,
dans lequel les données d'apprentissage comprennent un état cible (31) dans les itinéraires de réponse correcte de chaque agent pour l'apprentissage et une pluralité d'ensembles de données,
dans lequel chacun des ensembles de données est configuré à l'aide d'une combinaison d'un état de chaque agent d'apprentissage lors d'un premier pas de temps et d'un état de chaque agent d'apprentissage lors d'un deuxième pas de temps,
dans lequel le deuxième pas de temps est un pas de temps adjacent au premier pas de temps, et
dans lequel l'apprentissage automatique du modèle de construction de carte de route (5) est configuré par :

le traitement d'un agent d'apprentissage parmi la pluralité d'agents d'apprentissage en tant qu'agent cible ;
traiter au moins certains des agents d'apprentissage restants parmi la pluralité d'agents d'apprentissage comme les autres agents ; et
entraîner le modèle de construction de carte de route (5) de telle sorte qu'un état candidat de l'agent cible à un pas de temps suivant, qui est estimé par le module d'estimation (55), soit approprié pour un état de

44

l'agent d'apprentissage en question au deuxième pas de temps en, pour chaque ensemble de données, en fournissant un état de l'agent d'apprentissage au cours de le premier pas de temps au premier module de traitement (51) en tant qu'état candidat de l'agent cible au cours du premier pas de temps cible, et en fournissant des états d'au moins certains des agents d'apprentissage restants au cours du premier pas de temps au deuxième module de traitement (52) en tant qu'états candidats des autres agents au cours du premier pas de temps cible.

**13.** Dispositif de génération de modèle (1) selon la revendication 12,

dans lequel les informations d'agent cible (41) sont configurées pour inclure en outre un indicateur de direction représentant une direction dans laquelle l'agent cible doit effectuer une transition dans l'espace d'états continu, dans lequel chaque ensemble de données est configuré pour inclure en outre un indicateur d'apprentissage représentant une direction allant de l'état du premier pas de temps à l'état du deuxième pas de temps dans l'espace d'états continu, et

dans lequel l'apprentissage automatique du modèle de construction de carte de route (5) comprend la fourniture de l'indicateur d'apprentissage de l'agent concerné au premier module de traitement (51) en tant qu'indicateur de direction de l'agent cible lorsqu'un état candidat de l'agent cible à un pas de temps suivant est estimé pour chaque ensemble de données.

**14.** Procédé de génération de modèle qu'il consiste à amener un ordinateur à exécuter :

une étape (S101) consistant à obtenir des données d'apprentissage générées à partir des itinéraires de réponse correcte d'une pluralité d'agents pour l'apprentissage ; et
une étape (S102) consistant à effectuer un apprentissage automatique d'un modèle de construction de carte de route (5) en utilisant les données d'apprentissage obtenues,
dans lequel le modèle de construction de carte de route (5) comprend :

un premier module de traitement (51) configuré pour générer des premières informations de caractéristiques à partir d'informations d'agent cible (41) comprenant un état cible (31) d'un agent cible et un état candidat d'un pas de temps cible dans un espace d'états continu ;
un deuxième module de traitement (52) configuré pour générer des deuxièmes informations de caractéristiques à partir d'informations sur d'autres agents comprenant des états cibles (31) d'autres agents que l'agent cible et des états candidats du pas de temps cible ; et
un module d'estimation (55) configuré pour estimer un ou plusieurs états candidats de l'agent cible dans un pas de temps adjacent au pas de temps cible à partir des premières informations de caractéristiques et des deuxièmes informations de caractéristiques générées,
dans lequel les données d'apprentissage comprennent un état cible (31) dans les itinéraires de réponse correcte de chaque agent pour l'apprentissage et une pluralité d'ensembles de données,
dans lequel chacun des ensembles de données est configuré à l'aide d'une combinaison d'un état de chaque agent d'apprentissage lors d'un premier pas de temps et d'un état de chaque agent d'apprentissage lors d'un deuxième pas de temps,
dans lequel le deuxième pas de temps est un pas de temps adjacent au premier pas de temps, et
dans lequel l'apprentissage automatique du modèle de construction de carte de route (5) est configuré par :
le traitement d'un agent d'apprentissage parmi la pluralité d'agents d'apprentissage en tant qu'agent cible ;

traiter au moins certains des agents d'apprentissage restants parmi la pluralité d'agents d'apprentissage comme les autres agents ; et
entraîner le modèle de construction de carte de route (5) de telle sorte qu'un état candidat de l'agent cible à un pas de temps suivant, qui est estimé par le module d'estimation (55), soit approprié pour un état de l'agent d'apprentissage en question au deuxième pas de temps en, pour chaque ensemble de données, fournir un état de l'agent d'apprentissage au cours du premier pas de temps au premier module de traitement (51) en tant qu'état candidat de l'agent cible au cours du premier pas de temps cible, et fournir des états d'au moins certains des agents d'apprentissage restants au cours du premier pas de temps au deuxième module de traitement (52) en tant qu'états candidats des autres agents au cours du pas de temps cible.

FIG. 1

information of
target time step

41

target agent information
  • candidate state of target time step
  • goal state
-candidate state of past time step
-attribute information
-direction flag
-Cost-to-gocharacteristic
...

43

other agent information
  • candidate state of target time step
  • goal state
-candidate sate of past time step
-attribute information
-Cost-to-go characteristic
...

45

environmental information
  • information on obstacle
...

5

first
processing
module ~51

first characteristic
information

second
processing
module ~52

second
characteristic
information

third
processing
module ~53

third
characteristic
information

random number
vector

55

estimation
module

candidate
state of next
time step

## FIG. 2A

52

information of
i-th other agent

second
processing
module

$(F_i)$

$(w_i)$

integration
process

$$F = \sum_i F_i W_i$$

$$W_i = \frac{\exp(w_i)}{\sum_j \exp(w_j)}$$

## FIG. 2B

1

model generating device

12 — storage unit

81 — model generating program

3 — learning data

125 — learning result data

control unit

CPU

RAM

ROM

11

Communi-cation I/F — 13

14 — input device

15 — output device

drive

16

storage medium — 91

## FIG. 3

2

route planning system

22 — storage unit

82 — route planning program

125 — learning result data

control unit

CPU

RAM

ROM

21

23 — Communi-cation I/F

92 — storage medium

drive

26

input device — 24

output device — 25

## FIG. 4

FIG. 5

FIG. 6

FIG. 7

EP 4 417 941 B1

2

route planning system

| information acquiring unit | ~211 | map constructing unit | ~212 | search unit | ~213 | output unit | ~214 |

221

target information

information of target time step → roadmap constructing model 5 → candidate state of next time step

125~ learning result data

roadmap ~225

route searching

## FIG. 8

information of 1st agent
Tth time step

roadmap
constructing
model
5

information of 1st agent
(T+1)th time step

roadmap
constructing
model
5

information of 1st agent
(T+2)th time step

information of 2nd agent
Tth time step

roadmap
constructing
model
5

information of 2nd agent
(T+1)th time step

roadmap
constructing
model
5

information of 2nd agent
(T+2)th time step

information of M-th agent
Tth time step

roadmap
constructing
model
5

information of M-th agent
(T+1)th time step

roadmap
constructing
model
5

information of M-th agent
(T+2)th time step

by repeating estimation of candidate state of next time step, roadmap of each
agency is constructed

# FIG. 9

start

S101 — obtain generated learning data from correct answer route

S102 — perform machine learning of roadmap constructing model using obtained learning data

S103 — store result of machine learning

end

# FIG. 10

start

S201 — obtain target information including start state and goal state of each agent

S202 — construct roadmap for each agent from obtained target information by using trained roadmap constructing model

S203 — search for route of each agent on roadmap constructed for each agent

S204 — output information relating to search result

end

# FIG. 11

225X

agent X

start state

continuous state space

225Y

agent Y

start state

node

edge

edge

node

goal state

goal state

# FIG. 12

goal GY

6X

6Y

goal GX

## FIG. 13

201

roadmap constructing device

| information acquiring unit | ~211 |

| map constructing unit | ~212 |

| output unit | ~216 |

202

route searching device

| map acquiring unit | ~218 |

| search unit | ~213 |

| output unit | ~214 |

## FIG. 14

FIG. 15

FIG. 16A

FIG. 16B

FIG. 17

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2020117958 A1

- US 2020041274 A1

**Non-patent literature cited in the description**

- **MEHUL DAMANI** ; **ZHIYAO LUO** ; **EMERSON WENZEL** ; **GUILLAUME SARTORETTI**. PRIMAL2 Pathfinding via Reinforcement and Imitation Multi-Agent Learning -- Lifelong. *IEEE Robotics and Automation Letters*, 2021, vol. 6 (2), 2666-2673

- **FELIPE FELIX ARIAS** ; **BRIAN ANDREW ICHTER** ; **ALEKSANDRA FAUST** ; **NANCY M. AMATO**. Avoidance Critical Probabilistic Roadmaps for Motion Planning in Dynamic Environments. *IEEE International Conference on Robotics and Automation*, 2021